(19) **Europäisches Patentamt / European Patent Office / Office européen des brevets**

(11) **EP 4 733 011 A1**

(12) # DEMANDE DE BREVET EUROPEEN

(43) Date de publication:
**29.04.2026 Bulletin 2026/18**

(21) Numéro de dépôt: **24315498.6**

(22) Date de dépôt: **25.10.2024**

(51) Classification Internationale des Brevets (IPC):
***B25J 9/16*** *(2006.01)*

(52) Classification Coopérative des Brevets (CPC):
**B25J 9/163;** B25J 9/1633

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeurs:
• **Université Paris Cité**
  **75006 Paris (FR)**
• **CY Cergy Paris Université**
  **95000 Cergy (FR)**
• **Centre National de la Recherche Scientifique**
  **75016 Paris (FR)**

(72) Inventeurs:
• **Gaussier, Philippe**
  **95014 Cergy (FR)**
• **Ju, Mingda**
  **92000 Nanterre (FR)**

(74) Mandataire: **Jorget, Quentin**
  **IP Factory**
  **2, place de Touraine**
  **78000 Versailles (FR)**

Remarques:
•La demande, qui était incomplète au moment du dépôt est publiée telle quelle (règle 68(1) CBE).
•Une requête en rectification des revendication a été présentée conformément à la règle 139 CBE. Il sera statué sur cette requête au cours de la procédure engagée devant la division d'examen (Directives relatives à l'examen pratiqué à l'OEB, A-V, 3.).

(54) ## SYSTÈME DE CONTRÔLE POUR UN BRAS ROBOTIQUE

(57) L'invention concerne un système de contrôle pour un bras robotique dont chaque articulation est modélisée par un modèle mathématique s'inspirant d'un muscle de mammifère, représenté par au moins un ressort dont le contrôle d'une élongation permet de contrôler l'élongation de l'articulation correspondante. Ce modèle permet de définir une raideur associée à chaque ressort articulaire, permettant ainsi de définir des comportement plus ou moins compliants du bras robotique. Le système de contrôle met en oeuvre un réseau de neurones qui, par apprentissage, permet de définir l'élongation de l'articulation permettant d'obtenir une configuration articulaire donnée du bras robotique. Le système de contrôle selon l'invention déploie ensuite plusieurs mécanisme de contrôle secondaires qui permettent d'optimiser le contrôle du bras robotique, de le rendre plus précis et/ou plus véloce et/ou plus compliant par exemple.

[Fig.1]

$$\theta_0 = \Sigma w_j \cdot E_j$$

$$L_0 = \theta_0$$
$$L = \theta$$
$$\vec{F_s} = \kappa \cdot (\theta_0 - \theta)$$

$$\theta \text{ cible}$$

**Description**

Le contexte technique de la présente invention est celui du contrôle des bras robotique poly-articulés. Plus particulièrement, l'invention a trait à un système de contrôle d'un bras robotique poly-articulé à l'aide de technique issues des réseaux de neurones artificiels.

Dans l'état de la technique, on connaît plusieurs techniques d'asservissement et de contrôle d'un bras robotique poly(articulé, parmi lesquelles on distingue notamment

- le contrôle "classique" de bras robotique en position et vitesse exploitant très souvent des contrôleurs PID (Proportionnel, Intégral et Dérivé) placés en cascade les uns des autres. En particulier, on connait l'utilisation de tels contrôleurs PID comportant un premier contrôleur PID configuré pour asservir le bras robotique en position et un deuxième contrôleur PID configuré pour asservir le bras robotique en vitesse sur la trajectoire désirée. Ces techniques d'asservissement sont très efficaces et permettent d'assurer que l'inertie du bras robotique respecte bien les contraintes d'usage en termes d'énergie lors d'un impact avec un humain par exemple. En revanche, le contrôle n'est pas élastique. Le couple des moteurs n'est pas directement contrôlé ce qui peut être dangereux dans le cas d'une interaction physique avec des humains. De tels systèmes de contrôle doivent alors être dotés de nombreux capteurs ce qui les rend complexes et coûteux.

- une approche dite de contrôle optimal visant à mettre en oeuvre un modèle dynamique du bras robotique et à optimiser la loi de commande pour garantir un ensemble de propriétés sur la trajectoire désirée. Cette approche est clairement la plus puissante mais nécessite un calculateur puissant et surtout que le modèle dynamique du bras robotique ne change pas trop vite lors de l'utilisation dudit bras robotique. Par exemple, un changement de poids au niveau de l'effecteur du bras robotique doit pouvoir être connu ou rapidement estimé pour pouvoir continuer de garantir un fonctionnement optimal. Aussi, de telles approches ne sont pas facilement déployables dans des environnements ouverts dans lesquelles les conditions d'utilisation ou d'interaction avec le bras robotique ne sont pas parfaitement maîtrisées et invariantes.

Dans le domaine de la compliance mécanique, on connaît aussi de nombreux dispositifs limiteurs de couple, tels que par exemple via l'usage d'entrainement harmonique, de jauges de contraintes et du contrôle en impédance afin de pouvoir contrôler les forces exercées par et sur chaque articulation du bras robotique. L'objectif de ces dispositifs est de permettre au bras robotique de pouvoir s'ajuster aux contraintes et aux forces qui s'exercent sur lui ; et de corriger ainsi les erreurs de positionnement et d'orientation dont témoignent ces contraintes et ces forces.

En effet, dans la recherche de cet objectif et pour fonctionner de manière efficace, la prise en compte de l'inertie importante d'un bras robotique est indispensable pour maintenir sa compliance et pour pouvoir l'utiliser dans un mode semi passif ou de permettre à un opérateur d'interrompre le mouvement du bras robotique en faisant obstacle à son déplacement.

De manière connue, les solutions les moins coûteuses en temps de calcul emploient des cascades de contrôleurs PID pour contrôler respectivement la position, la vitesse et la force de tout ou partie des articulations du bras robotique. Ces technologies ont ensuite été adaptées pour un contrôle des robots collaboratifs.

La présente invention a pour objet de proposer un nouveau système de contrôle d'un bras robotique afin de répondre au moins en grande partie aux problèmes précédents et de conduire en outre à d'autres avantages.

Un autre but de l'invention est d'apprendre à contrôler en force un bras robotique poly-articulé.

Un autre but de l'invention est de pouvoir limiter les efforts du bras robotique afin de l'utiliser comme robot collaboratif.

Un autre but de l'invention est de proposer un tel système de contrôle d'un bras robotique qui soit moins complexe et plus économique que ceux connus jusqu'ici.

Selon un premier aspect de l'invention, on atteint au moins l'un des objectifs précités avec un système de contrôle du déplacement d'un bras robotique comportant :

- M articulations reliant différents segments du bras robotique, chaque articulation i étant associée à un ou plusieurs degrés de liberté, avec M et i entiers naturels, chaque degré de liberté étant associé à un ou plusieurs ressorts virtuels dont les élongations contrôlent la position du bras robotique ;

- au moins un actionneur associé à chaque articulation i et contrôlant en force ou en couple les élongations du ressort virtuel correspondant ;

- au moins un capteur de position associé à chaque articulation i afin de mesurer l'élongation mesurée $\theta_{mi}$ de l'articulation i correspondante ;

- une unité de calcul et de stockage reliés aux actionneurs et aux capteurs de position, avec :

  • un contrôleur haut niveau, tel que par exemple un réseau de neurones, entraîné pour simuler un modèle de muscle inspiré du contrôle musculaire chez l'animal ou l'humain, chaque muscle étant modélisé par au moins un ressort qui est utilisé pour contrôler chaque articulation i,

    le modèle simulant, pour chaque articulation i, le contrôle d'au moins un ressort virtuel principal ri de raideur $K_{ri}$ et d'élongation au repos $\theta_{0ri}$,

    le contrôleur haut niveau produisant en sortie des valeurs variant par exemple entre 0 et 1, et qui sont multipliées par une constante $L_{r\_max}$ correspondant à une élongation maximale autorisée pour chaque ressort virtuel r, pour obtenir des élongations au repos $\theta_{0ri}$ des ressorts virtuels,

    le contrôleur haut niveau apprenant à réaliser ce contrôle en fonction de consignes de l'utilisateur et de la physique du bras, le contrôleur haut niveau adaptant éventuellement les raideurs $K_{ri}$ des ressorts virtuels ;

  • un contrôleur bas niveau, piloté par le contrôleur haut niveau, le contrôleur bas niveau calculant, pour chaque articulation i et à partir des élongations mesurées $\theta_{mi}$ par les capteurs de position associés à chaque articulation i :

    une commande de contrôle $\Gamma_i$ qui comporte au moins une sous-commande principale de contrôle de l'élongation du ressort virtuel r principal : $K_{ri} \times (\theta_{0ri} - \theta mi)$,

    pour atteindre, à partir d'une position de départ de l'articulation i, une position d'équilibre cible $\theta_{i\_cible}$ ou une position transitoire cible $\theta_{i\_transitoire\_cible}$, pour chaque articulation i, à partir de l'élongation au repos $\theta_{0ri}$ fournies par le contrôleur haut niveau ;

  • une unité de stockage des élongations au repos apprises pour chaque articulation i et chaque ressort r, nommées $\theta_{0ri\_apprise/Ej}$, en fonction d'un ou de plusieurs états $E_{j\_appris}$ du bras robotique, avec j entier naturel, chaque état $E_{j\_appris}$ correspondant pour chacune des articulations i du bras robotique :

    i. à une position d'équilibre cible $\theta_{i\_cible/Ej}$ à atteindre et à maintenir, ou

    ii. à une position transitoire cible $\theta_{i\_transitoire\_cible/Ej}$ correspondant à une transition à atteindre, entre deux positions cibles,

  • une interface homme-machine (IHM), configurée notamment pour communiquer des positions cibles et émettre des signaux au contrôleur bas niveau et/ou au contrôleur haut niveau, afin notamment de contrôler la trajectoire du bras robotique,

  système dans lequel, pour chaque Etat $E_j$ et pour chaque articulation i, et à partir d'une position de départ :

- pendant l'apprentissage, un signal de renforcement est utilisé par le contrôleur haut niveau pour délivrer, en sortie, une nouvelle élongation au repos $\theta_{0ri}(n+1)$ afin de diminuer l'erreur entre la position d'équilibre cible $\theta_{i\_cible/Ej}$ ou la position transitoire cible $\theta_{i\_transitoire\_cible/Ej}$ et l'élongation mesurée $\theta_{mi}(n)$, à chaque itération n, jusqu'à obtenir, par itérations successives, une élongation au repos apprise $\theta_{ori\_apprise/Ej}$, pour laquelle l'erreur de positionnement est inférieure à une valeur V et pour laquelle :

  • la position d'équilibre cible $\theta_{i\_cible/Ej}$ est atteinte et maintenue pour chaque articulation i, la commande de contrôle compensant alors les forces extérieures appliquées au segment de l'articulation i, ou

  • la position transitoire cible $\theta_{i\_transitoire\_cible/Ej}$ de la transition est atteinte, avec n entier naturel correspondant au nombre d'itérations

- après apprentissage, la sous commande principale est $K_{ri} \times (\theta_{0ri\_apprise/Ej} - \theta_{mi}(n))$, et permet de déplacer le bras robotique vers la position d'équilibre cible $\theta_{i\_cible/Ej}$ ou la position transitoire cible $\theta_{i\_transitoire\_cible/Ej}$.

Dans le contexte de la présente invention, on définit le réseau de neurones comme étant un modèle mathématique utilisé pour définir des lois de commande du bras robotique, par calcul itératif et statistique. Le système de contrôle selon l'invention comporte un ou plusieurs réseaux de neurones fonctionnant en parallèle les uns des autres. Le système de contrôle selon l'invention comporte un ou plusieurs réseaux de neurones utilisés en séquentiel et/ou en parallèle pour contrôler le bras robotique.

Dans le contexte de la présente invention, on définit le contrôleur haut niveau comme comportant par exemple une carte électronique comportant des moyens de calculs, tels que par exemple des microprocesseurs et/ou des moyens de mémorisation, tels que par exemple des mémoires de stockage, vives ou mortes, permettant de déployer le réseau de neurones. Typiquement, les élongations au repos $\theta_{0ri}$ des ressorts virtuels de chaque articulation sont obtenues, éventuellement par itérations successives et/ou par calcul itératif par le réseau de neurones, sont obtenues en multipliant chaque valeur de sortie par l'élongation maximale autorisée $L_{r\_max}$ pour chaque ressort virtuel r, pour chaque articulation i.

Dans le contexte de la présente invention, on définit le contrôleur bas niveau comme étant une unité de commande des actionneurs, interagissant avec le réseau de neurones. Pus généralement, le contrôleur bas niveau est configuré pour réaliser un asservissement proportionnel des élongations envoyées en consigne par les réseaux de neurones. En cas de déconnections avec les réseaux de neurones, le contrôleur bas niveau maintient la dernière consigne d'élongation reçue pour les différents degrés de liberté du bras robotique. Dès lors, une force exercée sur le bras suffit à l'éloigner momentanément de sa position d'équilibre.

A titre d'exemple non limitatif, le contrôleur bas niveau comporte une carte électronique interfaçant les actionneurs et l'unité de calcul hébergeant le réseau de neurones. Dans le contexte de la présente invention, le contrôleur bas niveau et le contrôleur haut niveau peuvent être distincts l'un de l'autre ou être associés à un même carte électronique.

Dans le contexte de la présente invention, on définit le bras robotique comme étant un bras poly-articulé dont chaque segment est relié à au moins un segment directement adjacent par une articulation motorisée. Le bras robotique peut être du type série, mais pas exclusivement. D'une manière générale, la méthode de contrôle selon l'invention est applicable à tout dispositif robotique visant à contrôler en position et en effort un système mécanique. A titre d'exemples non limitatif, le bras robotique comporte six degrés de liberté disposés en série. Le bras robotique peut être utilisé dans tout type d'applications et de domaines industriels. Par exemple, le bras robotique peut être du type d'un bras robotique série utilisé dans des taches de « pick and place », de découpe, de soudure, de polissage... nécessitant une plus ou moins grande précision dans le contrôle de la position et ou de la vitesse de déplacement de l'extrémité du bras robotique. En outre, le bras robotique peut être du type d'un bras à actionnement électrique, pneumatique ou hydraulique.

Dans le contexte de la présente invention, on définit une articulation comme étant une liaison entre deux segments directement adjacents du bras robotique. Une articulation permet ainsi de fournir au moins un degré de liberté au segment auquel elle est attachée. Chaque articulation est représentée par l'indice i dans les termes et équations ci-après.

Dans le contexte de la présente invention, on définit un actionneur comme étant un moteur permettant de piloter chaque articulation et de commander son élongation, c'est-à-dire son mouvement vis-à-vis du ou des degrés de liberté qu'elle développe.

Dans le contexte de la présente invention, on définit un ressort virtuel comme étant un modèle mathématique simulant le comportement d'une articulation du bras robotique, par bio mimétisme. Dans les termes et équation ci-après, chaque ressort est représenté par la variable r. En particulier, dans la présente invention, on définit notamment des ressorts virtuels principaux, et des ressorts virtuels secondaires, correspondant respectivement à des modèles simplifiés ou plus complexes de l'articulation et de son contrôle.

Dans le contexte de la présente invention, on définit la raideur comme étant une variable représentant la rigidité d'une articulation donnée, c'est-à-dire celle du ressort virtuel représentant l'actionneur correspondant. Dans les termes et équations ci-après, la raideur est notée K, indicée par la variable r pour indiquer le ressort auquel elle est associée.

Dans le contexte de la présente invention, on définit l'élongation, notée $\theta$, elle représente la déformation - par élongation axiale ou hélicoïdale par exemple - du ressort virtuel représentant l'articulation et l'actionneur. Dans la présente invention, l'élongation d'un ressort virtuel donné est à la base de la loi de commande des actionneurs correspondants. Dans les termes et équations ci-après, l'élongation est indicée par i pour indiquer l'articulation à laquelle elle fait référence. En particulier, dans la présente invention, on définit notamment :

- $\theta\theta_{0i}$ comme étant l'élongation à vide d'une articulation, correspondant à l'élongation déterminée lors de l'apprentissage pour obtenir une position donnée du bras robotique, pour chaque articulation.

- $\theta_{mi}$ comme étant l'élongation mesurée, à un chaque instant, par un capteur d'une articulation donnée.

- $\theta_{cible}$ comme étant l'élongation d'équilibre, celle qu'on vise à atteindre pour un segment du robot, c'est-à-dire pour une articulation donnée. Dans ce cas, il s'agit d'une position d'équilibre à atteinte, c'est-à-dire une position dans laquelle l'articulation va être maintenue dans une position d'équilibre statique pendant une durée donnée.

- $\theta_{transitoire}$ comme étant l'élongation de passage pour une articulation du bras robotique, c'est-à-dire l'élongation au repos permettant de passer de manière transitoire/et temporaire d'une position - ou d'un ensemble de positions articulaires - à une autre sans s'arrêter, à la différence de l'élongation d'équilibre.

- $\theta_{0\_appris}$ comme étant l'élongation nominale apprise d'une articulation, obtenue à la fin d'une séquence d'itérations lors de l'apprentissage initial du bras robotique.

Dans le contexte de la présente invention, on définit un état E du bras robotique, qui représente une configuration articulaire du bras robotique ou de l'un de ses segments. L'état est indicé pour indiquer l'un des états - c'est-à-dire l'une des configurations articulaires - choisi parmi tous les états possible du bras robotique - c'est-à-dire parmi toutes les configurations articulaires que peut prendre le bras robotique dans son espace de travail.

Dans le contexte de la présente invention, on définit une position d'équilibre ou un état d'équilibre lorsque la somme des forces extérieures appliquées au bras robotique et/ou à l'articulation i considérée sont nulles. A contrario, on définit une position transitoire ou un état transitoire lorsque la somme des forces extérieures appliquées au bras robotique et/ou à l'articulation i considérée ne sont pas nulles.

Dans le contexte de la présente invention, on définit un signal de renforcement obtenu à partir de la différence d'élongation - pour une articulation donnée - entre celle mesurée et l'élongation désirée, et permettant d'alimenter le réseau de neurones pour l'itération suivante.

Dans le contexte de la présente invention, on définit une vitesse d'une articulation, c'est-à-dire la vitesse de l'actionneur correspondant et mesurée par le capteur associé. Il peut s'agir d'une vitesse linéaire dans le cas d'un actionneur de type vérin par exemple, ou d'une vitesse de rotation dans le cas d'un actionneur de type pivotant.

La présente invention propose d'appliquer des principes semblables dans le système de contrôle du bras robotique conforme au premier aspect de l'invention. En particulier, pour procurer une certaine élasticité au bras robotique, l'invention a recourt à différentes caractéristiques techniques :

- un modèle du muscle vu comme étant un ressort dont on peut contrôler l'élongation associé à un amortisseur en parallèle pour limiter sa vitesse. Chaque articulation est ainsi modélisée par un tel modèle et contrôlée via lui ; ,

- un apprentissage inspiré du contrôle cortical pour la création des états et des ganglions de la bases pour l'apprentissage par renforcement de l'élongation à utiliser ;

- des capacités de généralisation d'un contrôle inspiré des boucles cortico-striatales pour améliorer les capacités de généralisation du bras robotique, par interpolation entre différents états appris par exemple, lors du déplacement en contrôle manuel ou lorsqu'un contrôle en vitesse est nécessaire.

Ainsi, le système de contrôle d'un bras robotique selon l'invention permet de simuler la présence de ressorts au niveau de chaque articulation et dont la raideur peut être variable afin d'obtenir un tel bras robotique qui soit compliant sans utiliser de capteur d'effort ou un modèle dynamique explicite du bras robotique.

Le système de contrôle conforme au premier aspect de l'invention résout les problèmes techniques évoqués précédemment en ce qu'il permet d'assurer une raideur prédéterminée du bras robotique en toutes circonstances et sans besoin d'instrumentation additionnelle, conduisant ainsi à réduire sa complexité, les coûts et des risques de dysfonctionnement.

Le système de contrôle selon l'invention permet ainsi de rendre possible l'utilisation de n'importe quel bras robotique comme robot collaboratif, c'est à dire de le rendre capable de ne pas être dangereux en cas de contact physique avec un humain dans une situation d'interaction non prévue ou souhaitée. Plus particulièrement, le système de contrôle selon l'invention permet d'offrir un contrôle en couple des différents degrés de liberté du bras robotique afin de :

- augmenter la sécurité en limitant les efforts si le bras robotique ainsi contrôlé par le système de contrôle selon l'invention touche un humain ou un autre objet dans son espace de travail ;

- permettre des interactions entre le bras robotique et une surface de contact dans le cas où ladite surface de contact n'est pas préalablement connue ou pas parfaitement connue. Ainsi, si par exemple la surface de contact est plus proche que prévue, alors le bras robotique exercera un couple plus élevé que prévu mais malgré tout limité grâce au système de contrôle, contrairement à un bras robotique contrôlé par un contrôleur PID en cascade qui asservit la position et la vitesse de l'extrémité du bras ;

- limiter la consommation énergétique du bras robotique en utilisant un effort minimal pour obtenir un effet donné.

Le système de contrôle selon l'invention permet de contrôler et d'obtenir un bras robotique compliant - le rendant compatible à une utilisation collaborative -lorsqu'une raideur du bras robotique n'est trop importante ; mais aussi d'obtenir et de contrôler le bras robotique, dans d'autres circonstances, de manière beaucoup plus précise en lui imposant une raideur forte. A cet effet, le réseau de neurones du système de contrôle est configuré pour pouvoir apprendre - dans l'un ou l'autre des cas précités - à trouver la bonne élongation des articulations correspondantes pour une raideur donnée et une masse donnée.

Le mécanisme d'apprentissage par renforcement pour apprendre à contrôler le bras robotique est particulièrement innovant par rapport aux autres systèmes d'asservissement robotiques connus car :

- il permet de réaliser un apprentissage basse précision de l'élongation associé à l'état désiré considéré comme un point d'équilibre ;
- il permet de réaliser un apprentissage de la force minimale nécessaire pour initier un mouvement minimal capable de dépasser les forces de frottement sec et d'éviter à chaque fois un long temps d'intégration, comme cela serait le cas avec un contrôleur proportionnel et intégral (PI).

Le système de contrôle conforme au premier aspect de l'invention comporte en outre les capacités suivantes qui seront décrites plus en détail dans les paragraphes qui suivent, chacune de ces caractéristiques techniques offrant des avantages supérieurs aux technologies d'asservissement connues jusqu'alors :

- le système de contrôle selon l'invention permet de réaliser un apprentissage par renforcement de la commande sans modèle dynamique du bras robotique. L'apprentissage par renforcement de l'élongation et son adaptation permettent de tenir compte de la dynamique du bras robotique lors de l'apprentissage. Le réseau de neurones découvre par lui même que les forces à appliquer sur chaque articulation pour aller d'une position donnée à une autre. En particulier, selon le point de départ considéré, ces forces à appliquer - c'est-à-dire le contrôle de chaque articulation - peuvent être très différentes. Par exemple une force nulle est suffisante pour faire descendre le bras robotique à la position désirée - du fait de la gravité terrestre - alors qu'il faudra une force élevée pour le faire monter à cette position s'il part d'une position plus basse.

- le système de contrôle selon l'invention permet éventuellement d'ajouter un mécanisme d'adaptation pour garantir une bonne précision en pseudo statique. Pour permettre l'adaptation précise de la position d'une articulation donnée, la même mécanique est utilisée pour apprendre - en fonction de la position de départ et/ou de la position cible désirée - la force minimale à appliquer à l'articulation pour amorcer un petit déplacement dans la direction de la position cible désirée ;

- le système de contrôle selon l'invention permet éventuellement d'ajouter un mécanisme de correction d'erreur tenant compte de la dynamique réelle à la suite de quelques reproductions de la trajectoire.

- le système de contrôle selon l'invention permet éventuellement de généraliser par interpolation à des états intermédiaires pour explorer l'environnement de travail (contrôle manuel), ou de systématiser une trajectoire (par exemple dans le cas d'une tache de palettisation). Le mécanisme d'interpolation permet ainsi de contrôler la vitesse et de généraliser les déplacements à des positions articulaires du bras robotique jamais apprises auparavant.

Le système de contrôle conforme au premier aspect de l'invention comprend avantageusement au moins un des perfectionnements présentés ci-dessous, les caractéristiques techniques formant ces perfectionnements pouvant être prises seules ou en combinaison.

Selon un premier perfectionnement, l'élongation maximale et la raideur du ou des ressorts sont choisies et/ou définies par un opérateur grâce à l'interface homme-machine afin de lui permettre de définir un comportement collaboratif du bras robotique. Plus particulièrement, la définition de la raideur et/ou de l'élongation maximale des ressorts associés à chaque articulation permet de limiter la force et/ou le couple du bras robotique, pour un état $E_j$ donné. Cette configuration avantageuse permet de définir la manière dont le bras robotique interrompt sa trajectoire en cas d'interaction avec un objet ou une personne présente sur sa trajectoire alors qu'elle n'y était pas prévue initialement. Cette sélection ou cette définition des paramètres des ressorts virtuels permet aussi de déterminer la manière dont le bras robotique peut être repoussé en arrière par l'opérateur dans le cadre d'un bras robotique collaboratif et compliant.

En particulier :

- l'unité de stockage comporte plusieurs collections d'états, et pour chaque collection d'états, définies en fonction de la raideur fixée des ressorts virtuels, le contrôleur haut niveau est entraîné, pour chaque articulation i, à déplacer le robot vers la position cible associée à chaque état $E_j$ ;

- l'interface homme-machine IHM permet alors de sélectionner un mode d'utilisation du bras robotique en fonction de la raideur des ressorts virtuels de chaque articulation i associés à une collection d'états.

En d'autres termes l'interface homme-machine (IHM) émet des signaux permettant de changer les valeurs de raideur des ressorts $K_{ri}$ des articulations i du bras robotique, afin de proposer plusieurs modes de fonctionnement du bras robotique piloté par le système de commande, une fois le système de commande entraîné, avec pour chaque mode de fonctionnement un ensemble de états associés $E_j$ spécifiques aux valeurs de raideur $K_{ri}$ choisis - pour chaque articulation - et aux positions cibles correspondantes.

A l'inverse évidemment, le système de commande selon l'invention peut présenter des ressorts virtuels r avec des raideurs $K_r$ fixées, c'est-à-dire dont une valeur est constante et invariante durant l'utilisation du bras robotique.

Selon un autre perfectionnement, à une élongation maximale fixée au plus à un seuil donné, une raideur minimale $K_{ri\_min}$ par articulation i est calculée pour permettre d'atteindre la position associée à un état $E_j$, la raideur $K_{ri}$ de l'articulation i du système est comprise entre une raideur faible $K_{ri\_min}$ «système mou » et une raideur élevée $K_{ri\_max}$ « système dur », la valeur de raideur élevée $K_{ri\_max}$ pouvant atteindre par exemple plus de 100 fois $K_{ri\_min}$. Selon un mode de réalisation préféré de l'invention, la raideur $K_{ri}$ de l'articulation i du système de contrôle selon l'invention est comprise entre une raideur faible $K_{ri\_min} = 10$ et une raideur élevée $K_{ri\_max} = 5$ à $10 \times K_{ri\_min} = 50$ ou 100, pour respecter les contraintes des applications de type robot collaboratif ou lorsque le bras robotique entre en contact avec une surface dont la courbure est variable et/ou inconnue (raideur faible). En particulier, on choisira des valeurs faibles pour les raideurs $K_{ri}$ des articulations i si on souhaite un bras robotique compliant et capable de réagir à une interaction extérieure non prévue de manière modérée, amortie et douce, c'est-à-dire en étant capable de s'arrêter dans sa trajectoire et de ne pas lui opposer un couple ou une force importante. A contrario, on choisira des valeurs élevées pour les raideurs $K_{ri}$ des articulations i si on souhaite un bras robotique plus dynamique et moins compliant, c'est-à-dire pouvant résister ou s'opposer à une interaction extérieure non prévue de manière en lui imposant un couple ou une force élevée, voire en continuant sa trajectoire ou lorsque le bras robotique doit être très précis sur sa trajectoire.

Selon un autre perfectionnement, après l'entrainement :

- le contrôleur haut niveau calcule, pour une position de consigne P, les élongations au repos $\theta_{0ri/P}$ correspondant aux élongations au repos apprises $\theta_{0ri\_appris/EI}$ issues d'un état Ei appris et sélectionnées parmi une collection d'états $E_j$ appris, et qui sont les plus proches de la consigne P, en fonction d'une distance calculée entre la position de consigne P et les positions des états appris $E_j$ ;

- la reconnaissance de l'état $E_l$ tenant compte de la raideur des ressorts et de la position cible,

- l'unité de contrôle bas niveau calculant alors, à chaque itération n, la sous-commande principale de contrôle du ressort $K_{ri} \times (\theta_{0ri\_apprise/EI} - \theta_{mi}(n))$ pour chaque articulation i afin d'atteindre la position cible associée à l'état $E_l$.

Typiquement, dans l'espace articulaire, le $j^{ème}$ état choisi est défini par :

$$j= argmin_l(\Sigma_i (\theta_{i\_cible/EI} - \theta_{i\_cible/Ej'}))$$

Bien entendu, dans un espace cartésien, par exemple au niveau du ou des segments du bras robotique situé(s) au plus proche de son effecteur terminal, il est aussi possible de définir une distance entre deux états $E_j$ pour permettre de définir la position cible à atteindre.

Selon un autre perfectionnement, le contrôleur haut niveau est un réseau de neurones, et le mécanisme d'apprentissage est basé sur :

- un apprentissage associatif tel que la règle de Hebb modulé par un signal de renforcement ou de correction d'erreur. Dans le contexte de l'invention, l'apprentissage associatif du type de la règle de Hebb est un apprentissage en ligne ; ou, alternativement

- une descente de gradients sur un réseau multicouche. Dans le contexte de l'invention, l'apprentissage par descente de gradient est du type d'un apprentissage hors ligne ; ou, alternativement

- un algorithme d'apprentissage par renforcement.

Selon un autre perfectionnement, l'élongation au repos des ressorts est le produit d'une activité neuronale telle que :

$$\theta_{0ressort\_i}(n) = L_{r\_max\_i} \cdot f(\Sigma_j \, W_{ij}(n) \cdot E_j(P(n)))$$

Chaque élongation au repos étant transmise au contrôleur bas niveau pour piloter l'actionneur correspondant, où :

- $W_{ij}$ est un poids synaptique d'une synapse du réseau de neurones, c'est-à-dire un point de connexion entre deux neurones ;

- $E_j$ est un état discrétisé lié à la position cible ;

- $E_j(n) = 1$ si on désire aller vers la position associée à $E_j$ à l'itération n ou $E_j(n) = E_j(P(n))$ si on ne sait pas quel état activer pour la position P(n), Ej(n) correspondant alors au niveau de reconnaissance de l'état j pour la position P(n), et Ej(n) = 0 lorsque l'on ne veut pas aller vers la position associée à Ej. Dans le cas où $E_j(n) = E_j(P(n))$, alors, préférentiellement, on laisse le réseau de neurones chercher quel(s) état(s) $E_j$ correspond(ent) le mieux à la position cible P(n). Par exemple, on peut prendre $E_j(P(n)) = 1 - dist(E_j, P(n)) / d_{max}$ mais le calcul avec une fonction softmax permet de limiter le nombre des états pris en compte aux états les plus proches afin d'éviter une perte de précision liée à un moyennage trop large si un grand nombre d'états sont appris ;

- ressort est choisi parmi un ressort virtuel principal r, un ressort virtuel secondaire r', ou un ressort de correction d'erreur dynamique r" ;

- l'indice i correspond à l'articulation et au numéro du neurone en sortie, et l'indice j correspond au numéro de l'état $E_j$, f étant une fonction d'activation des neurones ayant par convention des valeurs de sortie comprises entre 0 et 1. La fonction f est préférentiellement non linéaire. Par exemple, f est une fonction sigmoïde, une fonction tangente hyperbolique, ou une fonction rampe à seuil, telle que par exemple du type vérifiant les conditions suivantes :

$$f(x) = x \text{ si } x > a \text{ et } x < b \text{ ;}$$

$$f(x) = T \text{ si } x > b \text{ ;}$$

$$f(x) = 0 \text{ sinon ;}$$

dans laquelle, a et b sont des nombres réels, par exemple a = 0 et b = 1, et T est un nombre réel, préférentiellement invariant durant l'utilisation du bras robotique, et par exemple égal à 1.

Selon un autre perfectionnement, le poids synaptique $W_{ij}$ est modifié à chaque itération en utilisant l'approximation suivante : $W_{ij}(n+1) = W_{ij}(n) + \varepsilon_{learn} \cdot dW_{ij}(n)$ avec $\varepsilon_{learn}$ taux d'apprentissage compris entre 0 et 1.

Selon un autre perfectionnement, des neurones du réseau de neurones sont utilisés pour :

- calculer à partir de la sortie des neurones, l'élongation au repos des ressorts i associés $\theta_{0\_ressort\_i\_apprise/Ej}(n)$ telle que : $\theta_{0\_ressort\_i\_apprise/Ej}(n) = L_{r\_max\_i} \times f(\Sigma_j \, W_{ij}(n) \cdot E_j(n))$ ;
- calculer la modification d'un poids synaptique d'un neurone du contrôleur haut niveau selon une variante de la règle de Hebb tenant compte d'un terme d'erreur ou de renforcement Ri(n).

Préférentiellement, le calcul de la modification du poids synaptique d'un neurone est réalisé comme suit :

$$dW_{ij}(n) = E_j(P(n)) \cdot \theta_{0\_ressort\_i/Ej}(n) \cdot R_i(n)$$

- la modification des poids synaptiques s'arrête dès que la valeur absolue du signal d'erreur diminue - correspondant au cas où l'articulation correspondante se déplace dans la direction de la position cible - cette restriction évitant de modifier l'apprentissage lorsque les articulations bougent correctement d'une configuration de départ vers leurs positions cibles,

- l'erreur Ri(n) pour le ressort i est définie par: $R_i(n) = f((\theta_{i\_cible/Ej}(n) - \theta_{mi}(n)) \times a1) - f((\theta_{mi}(n) - \theta_{i\_cible/Ej}(n)) \times a1)$, a1 étant un nombre réel choisi pour que le signal de renforcement sature pour une différence angulaire supérieure à un seuil angulaire donné. Par exemple, pour a1= 0,02 alors le seuil angulaire est égal à 360 x 0,02 = 7,2 degrés

Selon un autre perfectionnement, dans le système de contrôle selon l'invention met en oeuvre une fonction d'interpolation définie comme suit :

- après l'entrainement, le contrôleur haut niveau utilise, pour tout nouvel état $E_{j'}$ à apprendre et associé à une position cible $P(n)$, plusieurs états appris $E_j$ pour interpoler la réponse au nouvel état $E_{j'}$ ;
- l'unité de contrôle bas niveau calcule, à chaque itération n, pour chaque articulation i, la sous-commande principale de contrôle de l'élongation du ressort virtuel r : $K_{ri}$ x $(\theta_{0ri} - \theta_{mi}(n))$,

Avec $\theta_{0ri}$ obtenue grâce à la pondération des couples états/élongations appris autour de $E_{j'}$,
telle que l'activité $E_j(P(n))$ des états appris $E_j$ correspondant à leur distance à la position $P(n)$, après normalisation de type softmax, leurs activités devient $D_j$ tel que :
$D_j(P(n)) = \exp(\gamma * E_j(P(n))) / \Sigma_{l=1}$ à $_{Ne} \exp(\gamma * E_l(P(n)))$ avec $N_e$ est un entier positif correspondant au nombre d'états appris, et $\theta_{0ri} = L_{r\_max\_i} . f(\Sigma_{=1}$ à $_{Ne} W_{ij} . Dj(P(n)))$ avec :

- y une constante permettant de rehausser fortement les états les plus actifs et de mettre à 0 les autres. A titre d'exemple non limitatif, y = 30 ;

- f est une fonction rampe bornée y = f(x) telle que : y = 0 si x < 0, y = 1 si x > 1 et y = x sinon ;

- $E_j(P(n))$ traduit un niveau de reconnaissance de l'état $E_j$ pour la position $P(n)$. Par exemple, $E_j(P(n))$ = 1 - dist($E_j$, $P(n)$) / $d_{max}$ avec $d_{max}$ est un terme de normalisation correspondant à la distance maximale possible entre les positions apprises et les positions testées. A titre d'exemple non limitatif d'un formalisme neuronal utilisé , un changement d'échelle est réalisé pour ramener toutes les entrées à une valeur comprise entre 0 et 1 ;

- $W_{ij}$ est un poids synaptique appris d'un neurone du réseau de neurone ;

La position cible $P(n)$ dépend des positions articulaires que l'on souhaite obtenir et des raideurs des articulations i du bras robotique piloté par le système de contrôle selon l'invention.

Ainsi, l'interpolation réalisée par le système de contrôle selon l'invention permet de compenser partiellement les forces extérieures appliquées sur les différents segments du bras robotique pour que la position à l'équilibre du bras robotique corresponde au mieux à la position cible associée au contexte non appris Cj'. L'interpolation n'offre qu'une approximation de la solution, c'est-à-dire de la position cible recherchée. Le mécanisme d'adaptation fine est avantageusement exploité en complément de la fonction d'interpolation pour assurer une correction finale permettant de rejoindre le point cible sans nécessiter un apprentissage ex nihilo. Cette configuration avantageuse permet de réduire drastiquement le temps d'apprentissage du bras robotique piloté par le système de contrôle selon l'invention.
Selon un autre perfectionnement, pour rejoindre une position cible non apprise P définie dans l'espace articulaire par $(\theta_{0\_cible},...\theta_{i\_cible}, ..., \theta_{M\_cible})$ ou dans l'espace de la tache, c'est-à-dire par exemple un espace cartésien en 3 dimensions complété par 3 orientations de l'effecteur terminal, soit six dimensions en tout, à partir des états $E_{mapping\_j}$ associés :

- à 4 positions précédemment apprises les plus proches dans l'espace articulaire de la position cible en 3D, ou

- aux orientations de l'extrémité du bras de robot pour ces 4 positions définies par les angles d'Euler ou les angles de lacet, roulis et tangage, ou

- à chaque articulation considérée indépendamment pour réduire la complexité. Dans ce cas, préférentiellement, la reconnaissance des états voisins pour une articulation est alors limitée aux deux angles appris les plus proches de la position angulaire associée à l'état courant.

Alors, pour chaque articulation i, les élongations proposées sont pondérées par le niveau de reconnaissance des états $E_{\_mapping\_j}$ pour la position cible, suivant :

$$\theta_{0ri}(n) = L_{r\_max\_i} . f (\Sigma_{k=1..4 \text{ des } l=top-k(E\_mapping\_j(P(n)), k)} W_{ij} . E_{mapping\_l}(P(n)))$$

où top-k(E,k) correspond au top-k des activités des états $E_{mapping\_j}$ en fonction de la position $P(n)$ cible,
et

$$E_{mapping\_I}(P(n)) = 1 - dist(E_{mapping\_I}, P(n)) / d_{max}$$

et $W_{ij}$ est un poids synaptique appris.

Eventuellement, la fonction Top-k(A) peut être définie récursivement comme étant l'ensemble des éléments de A tels que :

$$Top\text{-}k(A, 1) = \{max(A)\}$$

$$Top\text{-}k(A, i + 1) = \{max(A - top\text{-}k(A, i))\} \cup top\text{-}k(A, i)$$

Selon un autre perfectionnement, le contrôleur haut niveau est entraîné, via un mécanisme d'adaptation, lors de l'apprentissage ou en phase d'utilisation, pour un état $E_j$:

$$\Gamma_i(n) = K_{ri} \times (\theta_{0ri\_apprise/Ej} - \theta_{mi}(n)) + K_{r'i}.(\theta_{0r'i\_Ej(n)} - \theta_{mi}(n))$$

le contrôleur haut niveau utilisant la modélisation d'une élongation $\theta_{0r'i\_Ej(n)}$ d'au moins un ressort secondaire virtuel $r'_i$ par articulation i et situé en série du ressort virtuel principal $r_i$,

l'élongation maximale du ressort secondaire est très inférieure à l'élongation maximale du ressort principal, typiquement plus de 10 fois moins. Cette configuration avantageuse permet de limiter la distance sur laquelle l'adaptation est possible et d'éviter de transformer la position contrôlée par le ressort principal.

Après apprentissage, la commande de contrôlé $\Gamma i$ permet à partir de la position de départ, de déplacer le bras robotique vers la position d'équilibre cible $\theta_{i\_cible/Ej}$ qui sera atteinte avec une erreur inférieure à un seuil $S_{adapt}$ inférieure à la valeur V, à une itération N,

La commande de contrôle $\Gamma_i$ compensant à ce moment-là les forces extérieures appliquées aux segments pour chacune des articulations i du bras robotique, et maintenant la position du bras à une erreur inférieure au seuil $S_{adapt}$ pour les itérations suivant l'itération N.

Le mécanisme d'adaptation défini ci-dessus ne diffère du mécanisme d'apprentissage qu'au niveau du pas d'apprentissage qui est beaucoup plus faible pour le mécanisme d'adaptation. Typiquement, le pas d'adaptation utilisé durant l'adaptation est égal ou approximativement égal au centième du pas d'apprentissage utilisé durant le mécanisme d'apprentissage. Eventuellement, si on souhaite une adaptation plus rapide, le pas d'apprentissage utilisé durant l'adaptation peut être égal ou approximativement égal au dixième de celui utilisé pour l'apprentissage. En outre, le mécanisme d'adaptation n'est déclenché que lorsque la distance entre l'effecteur terminal du bras robotique et la position cible est inférieure à un seuil $S_{adapt}$.

Selon un autre perfectionnement, un autre ressort secondaire est ajouté pour apprendre la force minimale permettant d'initier un déplacement et vaincre les forces de frottement sec qui sont en général plus grandes que les forces de frottement visqueux afin de générer directement cette force lorsque le bras arrête de se rapprocher de la position cible. Ce mécanisme ne se déclenche que lorsque la distance entre l'effecteur terminal et la cible est inférieure au seuil $S_{adapt}$. Ce mécanisme permet de remédier au risque d'une absence de mouvement en phase d'adaptation liée aux faibles forces ou couples induits par le mécanisme d'adaptation.

Selon un autre perfectionnement, le contrôleur haut niveau est entraîné pour apprendre différentes élongations au repos $\theta_{0ri}$ - pour chaque articulation i - en fonction de la dynamique de la trajectoire cible.

La trajectoire cible est discrétisée en différents points de passage qui constituent des positions cibles pour lesquelles des élongations au repos $\theta_{0ri}$ spécifiques sont déterminées.

Cet apprentissage se fait avantageusement suivant l'ordre des points de passage, d'état en état, chaque état correspondant dans ce cas à une transition entre deux positions cibles dépendant du sens de déplacement afin que le robot puisse apprendre à tenir compte des effets liés à son inertie et à la dynamique de la trajectoire cible. On notera que, dans le contexte de la présente invention, pour les articulations du bras robotique, l'apprentissage des élongations de chaque articulation i permettant d'aller de l'état A du bras robotique vers l'état B dudit bras robotique est différent de l'apprentissage des élongations de chaque articulation i permettant de déplacer le bras robotique depuis l'état C vers l'état B. En d'autres termes, l'apprentissage du bras robotique par le système de contrôle selon l'invention doit considérer une première succession d'états entre A et B puis deuxième succession d'états entre C et B plutôt que, plus simplement, un apprentissage de l'état B et de ses états voisins.

Selon un autre perfectionnement, l'unité de calcul et de stockage met en oeuvre lorsque le robot est en fonctionnement dynamique et se déplace entre plusieurs états, un mécanisme de correction d'erreur en dynamique utilisant l'erreur mesurée à la dernière itération du déplacement visant à atteindre la position associée à un état $E_j$ pour contrôler pour chaque articulation i un ressort virtuel secondaire de correction d'erreur dynamique, situé en série du ressort virtuel principal.

Ce ressort virtuel secondaire s'oppose ou complétant l'effet du ressort virtuel principal en proposant un terme de correction intégrant par corrections itératives l'effet des inerties lors de la reproduction d'un même mouvement, mécanisme de correction d'erreur en dynamique dans lequel l'unité de contrôle réalise la somme de la sous-commande de contrôle principal et de la sous-commande du ressort secondaire associé à l'adaptation dynamique :

$$\Gamma i(n) = K_{ri}.(\theta_{0ri\_apprise/Ej} - \theta_{mi}(n)) + K_{r''i} * (\theta_{0\_dyn\_i}(p) - \theta_{mi}(n))$$

En cas de présence d'un ressort secondaire r' d'adaptation, alors la commande de contrôle $\Gamma_i(n)$ s'écrit :

$$\Gamma_i(n) = K_{ri}.(\theta_{0ri\_apprise/Ej} - \theta_{mi}(n)) + K_{r'i}.(\theta_{0r'i/Ej}(n) - \theta_{mi}(n)) + K_{r''i} * (\theta_{0\_dyn\_i} - \theta_{mi}(n))$$

Avec p un entier naturel correspondant à la dernière itération programmée pour atteindre la position cible Ej.
La mise à jour de $\theta_{0dyn\_i}(n)$ s'effectue à chaque itération n en utilisant :

$$\theta_{0dyn\_i}(p) = Lr''_{max} . f(W_{dyn\_ij}(p) . E_j(p))$$

où l'élongation $\theta_{0dyn\_i}$ de ce ressort est modifiée de manière à ce qu'à la fin d'un tronçon de mouvement entre deux états $E_{j1}$ et $E_{j2}$, la position articulaire de l'articulation considérée se rapproche de plus en plus de la position articulaire cible $E_{j2}$, suivant l'apprentissage du contrôleur haut niveau comme suit :

$$dW_{dyn\_ij}(p) = r_i(p) * E_j(p)$$

et

$$W_{dyn\_ij}(p+1) = W_{dyn\_ij}(p) + \varepsilon_{learn} . dW_{dyn\_ij}(p)$$

avec

$$r_i(p) = \theta_{cible\_i}(p) - \theta_{mi}(p)$$

Avec p un entier naturel correspondant à la dernière itération programmée pour atteindre la position cible $E_j$.
Typiquement, la vitesse d'apprentissage $dW_{dyn\_ij}(p)$ est comprise entre 0 et 1, préférentiellement comprise entre 0 et 0,5.
On arrête l'apprentissage, lorsque l'erreur entre la position associée à l'état $E_j$ et la position mesurée à l'itération p est inférieure à un seuil de précision S'
Selon un autre perfectionnement de l'invention, le modèle de muscle pour chaque articulation i est représenté pour chaque type de ressort - principal ou secondaire - par une paire de ressorts virtuels antagonistes, et l'unité de commande bas niveau somme les deux sous commandes de contrôle : $\Gamma^+i(n)$ associé au premier ressort et $\Gamma^-i(n)$ associé au second ressort antagoniste, telle que :

$$\Gamma^+i(n) = K_{ressort\_i} \times (\theta_{0ri+}(n) - \theta_{mi}(n)) \text{ et } \Gamma^-i(n) = - K_{ressort\_i} \times (\theta_{0ri-}(n) - \theta_{mi}(n))$$

L'apprentissage de l'élongation est réalisé en parallèle sur les deux ressorts associés à chaque articulation.
Selon un autre perfectionnement de l'invention, le contrôleur bas niveau somme, à partir des élongations mesurées $\theta_{mi}$, lors du déplacement du bras robotique, la sous commande de contrôle de l'élongation et une sous commande permettant d'aider à la synchronisation des mouvements des différentes articulations en limitant la vitesse de chaque articulation i en fonction de la différence entre une vitesse réelle mesurée de l'articulation et une vitesse cible pour ladite articulation qui s'écrit : $\Gamma'v_i(n) = K'v_i*(V_{cible\_i} - V_{mi})$ où $V_{mi}$ est la dérivée de $\theta_{mi}$, si cette vitesse réelle mesurée $V_{mi}$ est supérieure à la vitesse cible $V_{cible\_i}$.
Cette synchronisation des mouvements des différentes articulations du bras robotique est obtenue en réduisant celles qui présenteraient un déplacement articulaire - c'est-à-dire une vitesse d'élongation - trop élevée. Pour ce faire, le système de contrôle identifie et régule la vitesse de déplacement des articulations qui se déploient trop rapidement par rapport à une vitesse cible $V_{cible}$ prédéterminée. Eventuellement, le système de contrôle met ici en oeuvre un amortissement de type visqueux.

Selon un autre perfectionnement de l'invention, le contrôleur bas niveau somme lors du déplacement, à partir des élongations mesurées $\theta_{mi}$ :

- la sous commande principale de contrôle de l'élongation ; et

- une sous commande de limitation de vitesse pour chaque articulation i, et qui s'écrit

$$\Gamma v_i(n) = Kv_i \times (V_{seuil\_i} - V_{mi})$$

où $V_{mi}$ est la dérivée de $\theta_{mi}$, et qui s'active si la vitesse mesurée $V_m$ de l'articulation correspondante i est supérieure à une vitesse seuil $V_{seuil\_i}$.

Cette force ou couple est ajoutée à la force et/ou au couple élastique calculé précédemment. Cette configuration avantageuse permet de sécuriser le système de contrôle selon l'invention et le bras robotique en évitant que, pour passer d'un état à l'autre, la vitesse des articulations ne devienne trop importante et/ou trop dangereuse.

Selon un autre perfectionnement de l'invention, au cours du déplacement entre deux positions cibles A et B associées respectivement à un état de départ et à un état d'arrivée, le contrôleur haut niveau utilise les élongations au repos apprises $\theta_{0i\_appris}$ des deux états pour calculer de nouvelles élongations au repos correspondant à leur pondération lors du déplacement pour contrôler explicitement la vitesse de l'effecteur terminal (vit) lors de son mouvement le long de la trajectoire AB en utilisant l'équation de discrétisation du déplacement suivante :

$$E_B(n) = (n-n_0) / N_{AB} \text{ et } E_A(n) = 1 - E_B(n),$$

Dans cette équation, le bras robotique part de $E_A = 1$ et $E_B = 0$ pour aller à $E_A = 0$ et $E_B = 1$ à la fin du déplacement.

Avec $n = n_0$ à la dernière itération de A - correspondant à la première itération du déplacement de A vers B, et $N_{AB}$ le nombre d'itérations pour aller de A à B calculé en fonction du temps de cycle Tc de calcul du contrôleur haut niveau : $N_{AB} = (dist(A,B) / vit) / Tc$.

dist(A,B) est la distance séparant la position A de la position B

Le nombre d'itérations $N_{AB}$ correspond au nombre de points intermédiaires, c'est-à-dire le nombre d'états intermédiaires définis entre l'état A et l'état B.

Le contrôleur bas niveau somme les sous commandes associées aux deux états en les pondérant afin :

- d'atteindre à chaque itération n de $n_0$ à $n_0{}^+ N_{AB}$, une nouvelle position d'équilibre entre A et B
- de contrôler la vitesse de chaque articulation i en imposant une vitesse supérieure ou égale à une vitesse cible, en exploitant également une sous commande de limitation de vitesse pour chaque articulation i, et qui s'écrit

$$\Gamma v_i(n) = Kv_i \times (V_{seuil\_i} - V_{mi})$$

avec $V_{mi}$ = dérivée de $\theta_{mi}$, et qui s'active si la vitesse mesurée $V_m$ de l'articulation correspondante i est supérieure à une vitesse seuil $V_{seuil\_i}$.

Ici, l'intérêt de limiter la vitesse de chaque articulation i est de garantir la sécurité du bras robotique et/ou des opérateurs situés à proximité en évitant que la vitesse de déplacement d'une articulation ne dépasse la vitesse seuil $V_{seuil\_i}$.

Bien entendu, la vitesse de chaque articulation dépend d'une part d'un échantillonnage spatial, c'est-à-dire finalement une certaine densité d'états intermédiaires sélectionnés entre deux états cibles successifs, ou même une certaine densités d'états cibles utilisés pour piloter le bras robotique le long d'une trajectoire. D'autre part, la vitesse de chaque articulation dépend aussi d'une fréquence de pilotage du bras robotique, c'est-à-dire finalement la fréquence selon laquelle des états cibles successifs sont pilotés au bras robotique. En fonction de ces deux paramètres - la fréquence de pilotage et l'échantillonnage spatial - la définition des états et la stabilisation du bras robotique - et de chacune de ses articulations - aux configurations articulaires représentant ces états permet de piloter le bras robotique de manière plus ou moins dynamique.

Selon un autre perfectionnement de l'invention, le contrôleur bas niveau somme lors du déplacement, à partir des élongations $\theta_i$ de chaque articulation :

- la sous commande principale de contrôle de l'élongation du ressort correspondant et
- une sous-commande de régulation de la vitesse de chaque articulation i qui est fonction de la différence entre la vitesse réelle mesurée et la vitesse cible :

$$K_{V'}*(V_{cible} - V_{mesurée}) \text{ avec } V_{mesurée} = d\theta_i/dt$$

Eventuellement, le système de contrôle met ici en oeuvre un amortissement de type visqueux.

Selon un autre perfectionnement de l'invention, le système présente des ressorts virtuels r, r', r", avec des raideurs $K_{ri}$, $K_{r'i}$ et $K_{r"i}$ dont la valeur dépend des états $E_j$.

Selon un autre perfectionnement de l'invention, les raideurs $K_{ri}(n)$ sont apprises et réglées par le réseau de neurones et le contrôleur bas niveau, via le mécanisme d'apprentissage par renforcement, le taux d'apprentissage de l'élongation $\theta_{0ri}(n)$ étant plus rapide que celle de la raideur $K_{ri}(n)$. Dans le contexte de la présente invention, le taux d'apprentissage contrôle la capacité du réseau de neurones à trouver la bonne solution pour faire converger une articulation donnée vers une configuration articulaire attendue, c'est-à-dire une élongation cible. Le taux d'apprentissage correspond finalement à un nombre d'itération plus ou moins important et une précision plus ou moins grande de la solution

Selon un autre perfectionnement de l'invention, les élongations sont angulaires - dans le cas d'un ressort virtuel de torsion ou hélicoïdal ou les élongations sont linéaires - dans le cas d'un ressort virtuel linéaire.

Selon un autre perfectionnement de l'invention, le système de contrôle est :

- sans capteurs d'efforts, telles que par exemple des jauges de contraintes ; et/ou

- sans mécanique additionnelle - c'est-à-dire sans embrayage et/ou sans ressort mécanique permettant de limiter les efforts. On rappelle que, de manière particulièrement avantageuse, le système de contrôle du bras robotique selon l'invention permet de limiter les couples et efforts générés par l'organe effecteur du bras robotique par la seule définition d'une raideur et/ou d'une élongation maximale pour chaque ressort associé à chaque articulation ; et/ou

- sans modèle dynamique du bras robotique pour en piloter son fonctionnement. Dans le système de contrôle selon l'invention, les effets dynamiques sont pris en compte par l'apprentissage des élongations au repos des ressorts associés à chaque articulation. Complémentairement ou alternativement, la caractérisation des états correspondant du bras robotique donne lieu à des transitions entre deux états successifs qui tiennent compte du sens et de la vitesse de déplacement du bras robotique et de chacune de ses articulations. Ainsi, par exemple, les états articulaires du bras robotique $E_{AB}$ qui permettent de passer de l'état A à l'état B diffèrent des états articulaires $E_{CB}$ qui permettent de passer de l'état C à l'état B, même si ces deux configurations articulaires mènent au même état B.

Selon un autre perfectionnement de l'invention, le robot est un robot collaboratif ou cobot, c'est-à-dire un robot ne devant pas dépasser une vitesse limite de déplacement et devant limiter sa force d'impact pour respecter les normes ISO associées.

Selon un autre perfectionnement de l'invention, le bras robotique est apte à s'adapter à tout type de surface non plane, par l'utilisation des ressorts virtuels, sans calculer l'équation de la surface non plane.

Selon un autre perfectionnement de l'invention, le bras robotique est configuré pour être utilisé dans les applications suivantes : la production de biens manufacturés, l'automobile, l'aéronautique, la santé et le bâtiment.

Selon un autre perfectionnement de l'invention, le réseau de neurones peut être choisi parmi :

- un deep network - ou réseau de neurones profond - apprenant à approximer la dynamique du bras pour ensuite affine le contrôle des élongations

- un réseau de neurones exploitant une règle d'apprentissage de type Qlearning et un réseau de neurones de type multi couches pour optimiser au mieux la forme de la trajectoire pour un signal de renforcement donné.

- un réseau de neurones récurrent

Selon un autre perfectionnement de l'invention, une position par défaut du bras robotique est la position obtenue par le bras robotique pour une élongation nulle ou un angle nul des actionneurs de chaque articulation, lié à une position de calibration.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

[Fig.1] illustre un schéma représentatif du modèle mathématique appliqué pour modéliser une articulation du bras robotique piloté par le système de contrôle selon l'invention ;

[Fig.2] illustre une première configuration articulaire du modèle présenté sur la FIGURE 1 ;

[Fig.3] illustre une deuxième configuration articulaire du modèle présenté sur la FIGURE 1 ;

[Fig.4] illustre un schéma représentatif d'un mécanisme d'interpolation mis en oeuvre par le système de contrôle selon l'invention ;

[Fig.5] illustre un schéma représentatif d'un mécanisme de pondération de la reconnaissance de 3 états du bras robotique par le système de contrôle selon l'invention ;

[Fig.6] illustre un diagramme temporel de l'apprentissage du bras robotique pour une configuration articulaire donnée et selon une valeur faible de rigidité articulaire ;

[Fig.7] illustre un diagramme temporel de l'apprentissage du bras robotique pour une configuration articulaire donnée et selon une valeur élevée de rigidité articulaire ;

[Fig.8] illustre un diagramme temporel de l'apprentissage sur la dynamique d'une trajectoire définie entre deux positions angulaires du bras robotique et selon une valeur faible de rigidité articulaire ;

[Fig.9] illustre un diagramme temporel de l'apprentissage sur la dynamique d'une trajectoire définie entre deux positions angulaires du bras robotique et selon une valeur élevée de rigidité articulaire ;

[Fig.10] illustre un diagramme temporel du bras robotique piloté par le système de contrôle selon l'invention et auquel un poids est ajouté, selon une valeur faible de rigidité articulaire ;

[Fig.11] illustre un diagramme temporel du bras robotique piloté par le système de contrôle selon l'invention et auquel un poids est ajouté, selon une valeur élevée de rigidité articulaire ;

[Fig.12] illustre un mécanisme d'adaptation du bras robotique piloté par le mécanisme de contrôle selon l'invention ;

[Fig.13] illustre un mécanisme d'interpolation du bras robotique piloté par le mécanisme de contrôle selon l'invention et le long d'une trajectoire définie initialement par uniquement deux positions apprises.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

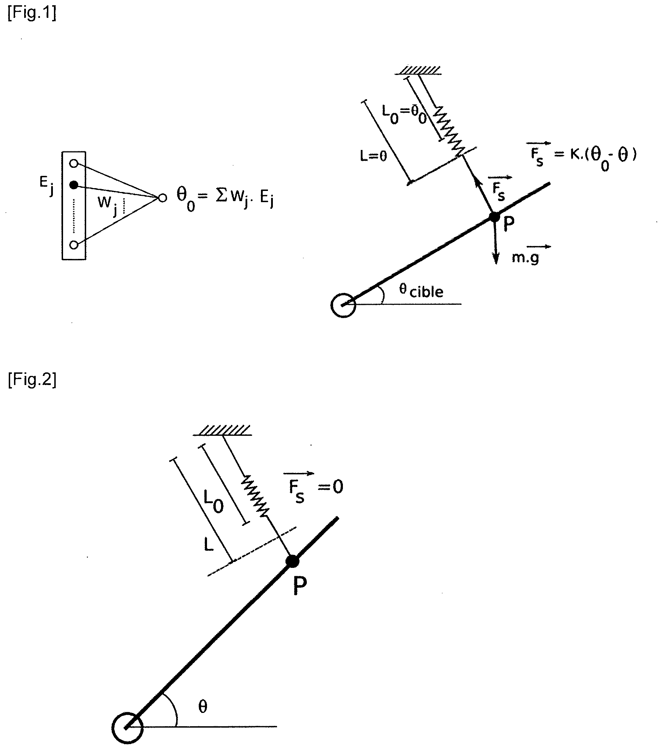

La FIGURE 1 illustre de manière schématique le modèle musculaire mis en oeuvre dans le système de contrôle selon l'invention, et dans lequel chaque articulation i du bras robotique est modélisée par un système à ressort. En particulier :

-   la position articulaire - c'est-à-dire l'élongation - de chaque articulation du bras robotique est déterminée par un capteur de position. Ainsi, la vitesse - angulaire ou linéaire - de chaque articulation peut être obtenue par dérivation temporelle de l'élongation angulaire ou de l'élongation linéique correspondante, ou encore à l'aide d'un capteur de position associé à un actionneur pilotant l'articulation concernée.

- chaque articulation - et l'actionneur qui lui est associé - est contrôlée en couple, notamment si on contrôle une rotation d'une articulation pivotante, ou en force, notamment si on contrôle un étirement d'une articulation linéaire ou si par exemple une articulation pivotante est contrôlée par l'étirement d'un vérin.

Par suite, chaque articulation est modélisée comme un système comportant au moins un ressort - comme visible sur la partie droite de la FIGURE 1. Ainsi, pour contrôler l'élongation de l'articulation, il suffit de contrôler l'élongation du ou des ressorts associés à ladite articulation.

Le système de contrôle selon l'invention met en oeuvre un réseau de neurones pour piloter le bras robotique. Ce pilotage est - par principe - associé à un contrôle de la rigidité de chaque articulation via le réseau de neurones. Ainsi, en fonction de l'état ou du contexte $E_i$, le réseau de neurone propose une élongation au repos $\theta_0$. En dehors de tout effort extérieur appliqué au bras robotique, la position d'équilibre d'un segment donné du bras robotique est alors obtenue lorsque la force du ou des ressorts associés à l'articulation correspondante compense la force de gravité s'exerçant sur ledit segment, comme représenté sur le schéma de droite de la FIGURE 1.

Le schéma de gauche de la FIGURE 1 illustre un neurone contrôlant en sortie l'élongation d'un ressort en fonction de la sélection d'un état $E_j$ du réseau de neurones mis en oeuvre pour piloter le bras robotique à l'aide du système de contrôle selon l'invention. Avantageusement, le réseau de neurones configuré pour piloter le bras robotique via un mécanisme d'apprentissage dont le but est d'obtenir - pour chaque synapse du réseau de neurones - un poids synaptique $W_j$ tel que la position d'équilibre du segment - associé à une élongation d'équilibre $\theta$ de ladite articulation corresponde à la configuration souhaitée du bras robotique.

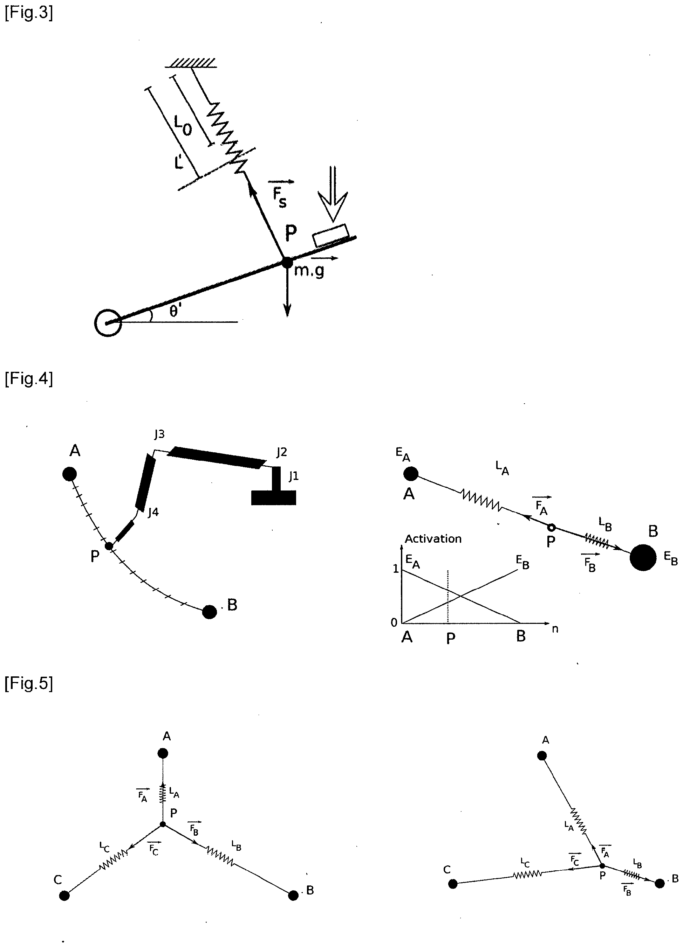

Bien entendu, le comportement du bras robotique, pour une même commande donnée, sera différent en fonction des forces extérieures qui lui sont appliquées. Les FIGURES 2 et 3 illustrent deux situations différentes de celle illustrée précédemment sur la FIGURE 1 et pour le même bras robotique et pour la même commande de ses articulations. La FIGURE 2 illustre une configuration dans laquelle le bras robotique est situé en dehors du champ de gravité. Aussi, en l'absence de gravité, la position d'équilibre de l'articulation i du segment représenté pour le bras robotique est directement celle associée à la valeur apprise par le réseau de neurones. On constate aussi que, pour cette même commande, le segment du bras robotique est dans une configuration plus relevée, c'est-à-dire que l'élongation d'équilibre calculée par le réseau de neurone est alors plus élevée que précédemment.

En revanche, si une force extérieure supplémentaire est ajoutée au niveau du segment du bras robotique et après l'apprentissage précédent, comme illustré sur la FIGURE 3, alors le bras robotique ne parviendra pas à la position d'équilibre « normale » - correspondant à celle qu'il avait atteinte sur la FIGURE 1 - mais il aura une position d'équilibre plus basse, c'est-à-dire que l'articulation correspondante du segment représenté sur la FIGURE 3 aura une élongation inférieure à celle qu'elle avait pour la configuration articulaire représentée sur la FIGURE 1. Dans le contexte de la présente invention, la force extérieure supplémentaire peut être de tout type. A titre d'exemple non limitatif, elle peut être causée par une charge portée par le bras robotique, ou encore un obstacle avec lequel le bras robotique interfère dans son espace de travail, tel que par exemple la présence d'un être humain.

Pour revenir à la position d'équilibre désirée, c'est-à-dire celle de la FIGURE 1 mais avec un « jeu » de forces extérieures différentes, il faudra donc que le réseau de neurones réduise le poids synaptique associé à son état actuel pour que la résultante des force extérieures appliquées au segment considéré du bras robotique soit nulle à la position d'équilibre désirée.

Dans le contexte de la présente invention, les forces extérieures appliquées à un segment donné du bras robotique comportent notamment, outre la gravité, des forces de frottement secs et/ou des forces de frottement visqueux. Ces forces de frottement sont celles rencontrées au niveau de chaque articulation. Les forces de frottement sec peuvent induire un arrêt du bras robotique à une position d'équilibre un peu différente de la position cible recherchée, si elles ne sont pas prises en compte.

Les paramètres de contrôle du bras robotique à l'aide du système de contrôle selon l'invention comprennent notamment :

- $E_i$ : un vecteur binaire ou analogique tel que le neurone activé du réseau de neurones corresponde à l'état du bras robotique - et du segment articulaire correspondant - pour une position d'équilibre désirée à un instant donnée dans une séquence ou au cours d'une trajectoire ;

- N : le nombre maximal d'états, c'est-à-dire de configurations articulaires du bras robotique, pouvant être appris par le système de contrôle ;

- $\mu$ : la vitesse d'apprentissage du réseau de neurones ;

- pr : la précision désirée pour l'obtention d'une position d'équilibre donnée ;

**EP 4 733 011 A1**

- K : la raideur du ressort virtuel associé à une articulation du bras robotique.

Un mécanisme d'apprentissage est mis en oeuvre pour permettre de trouver et d'apprendre quelles sont les élongations à introduire dans le modèle de ressort - pour chaque articulation - afin d'obtenir à l'équilibre la configuration souhaitée du bras robotique. A titre d'exemple non limitatif, le mécanisme d'apprentissage est du type d'un apprentissage par renforcement basé sur la règle de Hebb.

La commande du réseau de neurone est la suivante, illustrée ci-après pour un modèle de contrôle d'une articulation par un modèle à deux ressorts antagonistes, indexés (+) et (-) dans les équations qui suivent. Bien entendu, cet exemple n'est donné que pour illustrer et expliquer le fonctionnement de l'apprentissage et du pilotage du bras robotique ; et l'homme du métier saurait l'adapter à d'autres modèles de ressorts qui ne peuvent pas être tous décrits ici, par soucis de clarté et de concision.

Le mécanisme d'apprentissage permet au bras robotique piloté par le système de contrôle selon l'invention d'arriver dans le voisinage de la position cible désirée. Cependant, il est possible que le bras robotique ne s'arrête pas exactement à cette position d'équilibre à cause des forces de frottement et de l'inertie du bras robotique.

Les paragraphes ci-après illustrent le contrôle du bras robotique à l'aide du système de contrôle selon l'invention et par l'intermédiaire d'un mécanisme d'apprentissage initial, décrit ci-après pour le déplacement du bras robotique depuis un premier état d'équilibre $E_A$ correspondant à une première position A vers un deuxième état d'équilibre $E_B$ associé à une deuxième position B.

Le réseau de neurones commence donc en activant le contexte articulaire associé à l'état $E_A$ et converge vers A. Les élongations $\theta_i$ de chaque articulation i correspondent à la configuration articulaire associé à l'état $E_A$. Les poids synaptiques $W_i$ appris pour les élongations de chaque articulation tiennent compte de cette configuration désirée et de la masse du bras robotique. Bien entendu, les forces extérieures qui s'appliquent au bras robotique - et à chaque segment articulaire - diffèrent pour chacun de ses états E.

Pour configurer le bras robotique dans l'état $E_B$ associé à la position B, le système de contrôle désactive l'état $E_A$ du bras robotique associé à la position A et crée ensuite un nouvel état $E_B$ au niveau du réseau de neurones, cet état $E_B$ étant associé à la position d'équilibre cible B.

Cet apprentissage - illustré ici en une seule itération, par exemple du type « kmeans » et permettra de réactiver le même noeud synaptique du réseau de neurones pour la prochaine demande de déplacement du bras robotique dans la position B associée à l'état Es. La reconnaissance de l'état associée à la position A ou B est réalisée en fonction de la configuration articulaire désirée du bras robotique, dans un premier temps, ou de l'activation du noeud synaptique correspondant et cet état.

La première fois que le réseau de neurones active l'état $E_B$ associé à la position B, les poids synaptiques sont nuls ; et le bras robotique revient donc à sa configuration articulaire par défaut correspondant à des élongations nulles des articulations correspondantes et définies pour cette position B dite de calibration. Ensuite, une mesure par les capteurs de position associés aux articulations de la différence entre la position désirée du bras robotique - ou d'au moins une de ses articulations - et sa position courante crée un signal d'erreur qui induit le déclenchement d'un apprentissage par renforcement des poids synaptiques du réseau de neurones, de sorte à fournir les élongations associées à la position B de l'état $E_B$.

Durant cette phase, pour chaque articulation, le poids synaptique associé à l'état $E_{ij}$ correspondant est modifié via les équations de $dW_{+ij}$ et $dW_{-ij}$ définies précédemment.

Selon un mode de réalisation du système de contrôle selon l'invention, la raideur des ressorts associés à chaque articulation peut être constante et prédéterminée par l'opérateur, via l'interface Homme-machine par exemple. Bien entendu, la constante de raideur des articulations du bras robotique est doit choisie de sorte à être suffisamment élevée par rapport aux masses du bras robotique et à son inertie.

Une fois la position B apprise, le déclenchement de la position B associée à l'état $E_B = 1$, induit une nouvelle consigne pour les élongations au repos $\theta_0$ des ressorts de chaque articulation, et donc des forces qui induiront un déplacement du bras robotique jusqu'à atteindre un point d'équilibre au niveau duquel les forces engendrées par les ressorts des articulations sont égales aux forces extérieures appliquées et correspondant à la configuration angulaire désirée.

L'activation de l'état $E_A$ puis de l'état $E_B$ et à nouveau de l'état $E_A$ induit un mouvement de va et vient entre A et B. Les états $E_A$ et $E_B$ sont maintenus actifs pour permettre au ras robotique de rejoindre ces positions.

Le système de contrôle selon l'invention prévoit aussi un mécanisme d'interpolation qui est décrit ci-après, en référence à la FIGURE 4. Ce mécanisme d'interpolation - représenté suivant une seule dimension (pour simplifier) sur la FIGURE 4 - permet de contrôler la vitesse de déplacement sur la trajectoire AB en forçant le bras robotique à réaliser des petits déplacements - préférentiellement de longueur égales - entre A et B.

Pour ce faire, pour aller de la position A vers la position B de manière plus précise, il est possible d'activer $E_A$ et $E_B$ de manière simultanée, par exemple en définissant $_EA = 0.5$ et $E_B = 0.5$. Ce faisant, le point d'équilibre du bras robotique est situé dans une configuration articulaire à mi-chemin entre la configuration angulaire associée à A et celle associée à B.

En faisant changer dans le temps les niveaux d'activités de CA et CB le système de contrôle réalise une interpolation entre A et B. Cette configuration avantageuse est particulièrement astucieuse car elle permet aussi de contrôler la vitesse minimale de chaque articulation, en contrôlant le pas d'interpolation - défini par les rampes d'activation/désactivation des deux états successifs $E_A$ et $E_B$.

La FIGURE 5 illustre l'effet de la pondération de la reconnaissance de 3 états A, B et C en 2D pour la définition d'un point d'équilibre P. En changeant la pondération de chaque état $E_A$, $E_B$ et Ec, on augmente ou on réduit la force associée au ressort de chaque articulation et on peut ainsi positionner le bras robotique de manière précise à l'intérieur du triangle (A, B, C).

Le mécanisme d'interpolation entre plusieurs états articulaires du bras robotique et tel que décrit précédemment permet de généraliser des apprentissages épars et procure deux avantages principaux :

- une capacité à aller rapidement vers des points non appris de manière à permettre au bras robotique piloté par le système de contrôle d'apprendre une configuration permettant d'atteindre ces points. Cet avantage est particulièrement intéressant lorsque le bras robotique est utilisé en collaboration ou en présence d'un utilisateur pour permettre de déplacer le bras robotique vers les positions à apprendre. Dans ce cas le système de contrôle pourra exploiter un maillage 1D, 2D ou 3D de son espace de travail, tel que décrit ci-après, maillage réalisé lors d'une première étape d'étalonnage du bras robotique dans son espace de travail.

- une capacité à contrôler finement le déplacement du bras robotique sur sa trajectoire, en créant des points intermédiaires virtuels entre deux positions ou états préalablement appris. Cette configuration avantageuse permet aussi, comme évoqué précédemment, de contrôler la vitesse du bras robotique le long de la trajectoire.

Ensuite, le mécanisme d'interpolation évoqué précédemment est avantageusement exploité par le système de contrôle selon l'invention pour réaliser un pavage initial de l'espace de travail du bras robotique, de sorte à disposer ensuite d'une maille monodimensionnelle, bidimensionnelle ou tridimensionnelle qui servira de base pour une telle interpolation et un tel contrôle fin du bras robotique par le jeu des pondérations décrites précédemment.

Bien entendu, pour une interpolation en 2D, le système de contrôle selon l'invention exploite au moins 3 positions apprises autour de la position cible à atteindre. Pour une interpolation en 3D, le système de contrôle exploite au moins 4 positions apprises et définissant ensemble un tétraèdre. De manière préférée, un pavage hexagonal peut être utilisé pour repartir régulièrement les positions apprises servant de points de support pour des déplacement interpolés « intra-maille ». De cette manière, le système de contrôle du bras robotique apprend - lors d'un étalonnage initial - à rejoindre toutes les positions définies par la maille hexagonale elle-même, afin de pouvoir ensuite - lors de son utilisation opérationnelle, être en mesure d'attendre n'importe quelle position « intra-maille » en activant les positions associées aux sommets en 3D les plus proches de la position désirée. Cette interpolation est avantageusement réalisée en utilisant un algorithme des k plus proches voisins, par exemple.

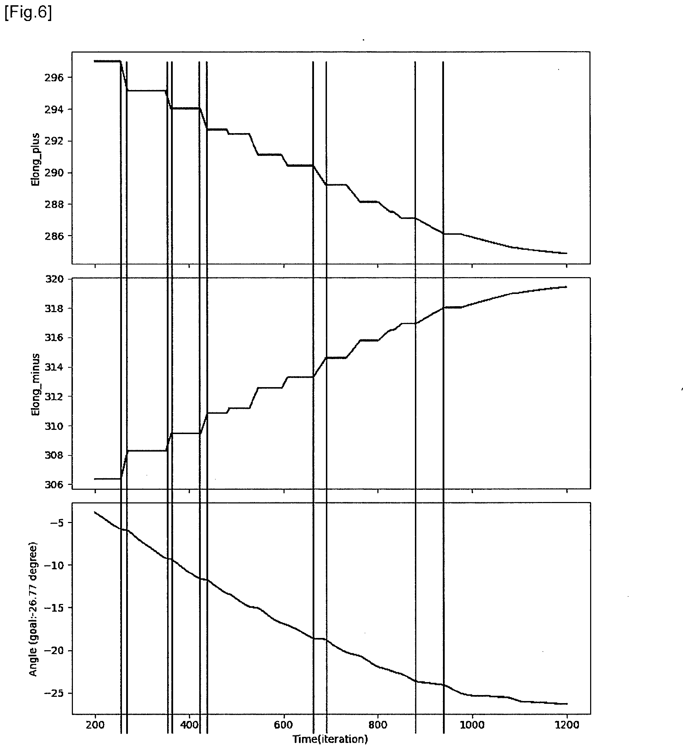

Les FIGURES 6 à 13 décrite ci-après illustrent les performances du système de contrôle selon l'invention. En particulier :

La FIGURE 6 illustre la méthode d'apprentissage pour le bras robotique à atteindre une élongation donnée - ici une position articulaire de -26° en modélisant un segment du bras robotique par deux ressorts antagonistes et avec une raideur dite faible, prise ici comme étant égale à 10. Le graphique du haut représente l'évolution des élongations du premier ressort « positif », le graphique du milieu représente l'évolution des élongations du deuxième ressort « négatif », et le graphique du bas représente l'évolution de la configuration articulaire du segment considéré, en représentant l'évolution de l'élongation de l'articulation correspondante. L'axe des abscisses des trois graphiques est un axe temporel, le pas de temps étant ici de 15 ms.

L'apprentissage des élongations des ressorts antagonistes (Elong_minus et Elong_plus) est réalisé à chaque fois que l'articulation correspondante arrête de progresser dans la bonne direction. On constate ainsi que, sur chaque palier horizontal ou sensiblement horizontal de l'articulation (graphique du bas), les élongations des ressorts antagonistes progressent et convergent vers la configuration - l'état - qui permet d'obtenir l'élongation désirée de l'articulation. Les paliers horizontaux des élongations des deux ressorts antagonistes correspondent ainsi aux périodes où le bras robotique n'apprend pas car il bouge dans la bonne direction, en minimisant l'erreur entre l'angle mesuré $\theta_{mi}$ et la position angulaire cible $\theta_{i\_cible}$ (ici i = 2 correspond au deuxième degré de liberté du bras robotique - c'est-à-dire sa deuxième articulation - et au premier degré de liberté dans le plan vertical). Le taux d'apprentissage est $\varepsilon$= 0.01.

L'arrêt du mouvement de l'articulation est lié à la force développée par les ressorts qui devient trop faible par rapport à l'élongation apprise, ou éventuellement à cause d'un mouvement dans une mauvaise direction.

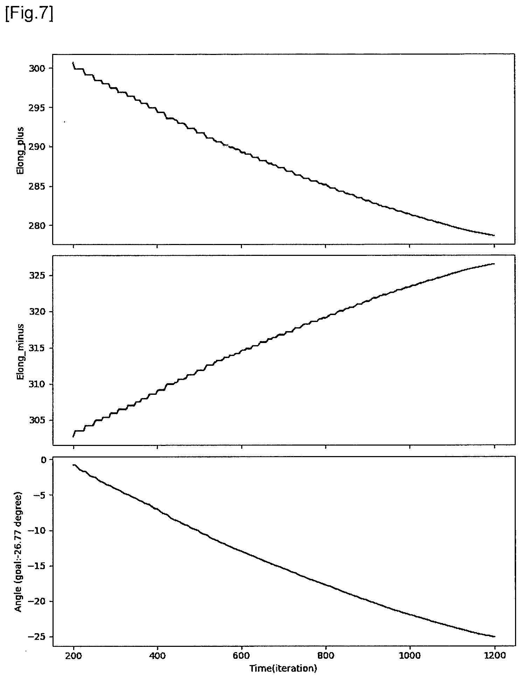

La FIGURE 7 est analogue à la FIGURE 6, mais la constante de raideur des ressorts antagonistes est désormais fixée à une valeur élevée, ici égale à 100. On constate que le mouvement de l'articulation et des deux ressorts antagonistes est plus continu que celui observé sur la FIGURE 6. La durée de l'apprentissage est dépendante du taux d'apprentissage utilisé (ici $\varepsilon$ = 0.01) multiplié par le niveau d'erreur (R).

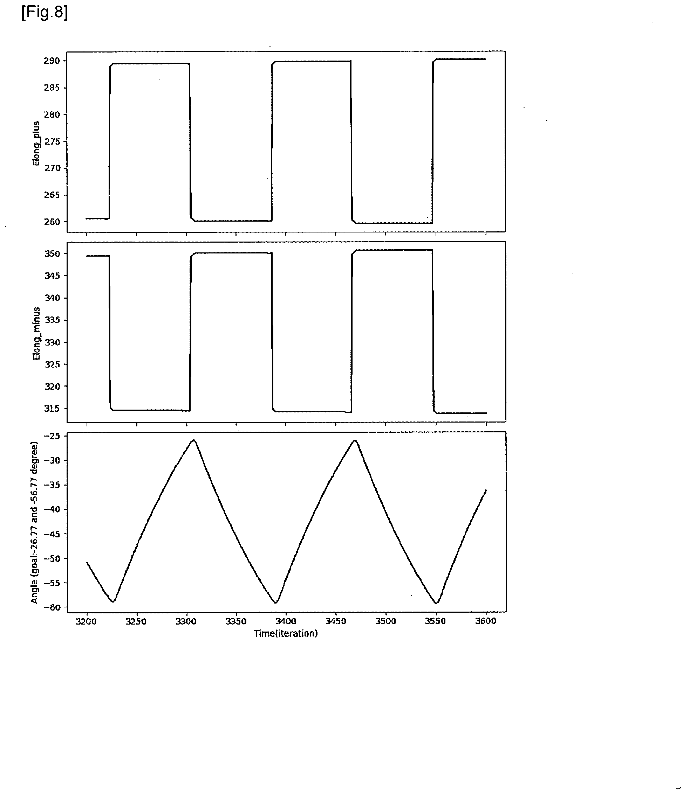

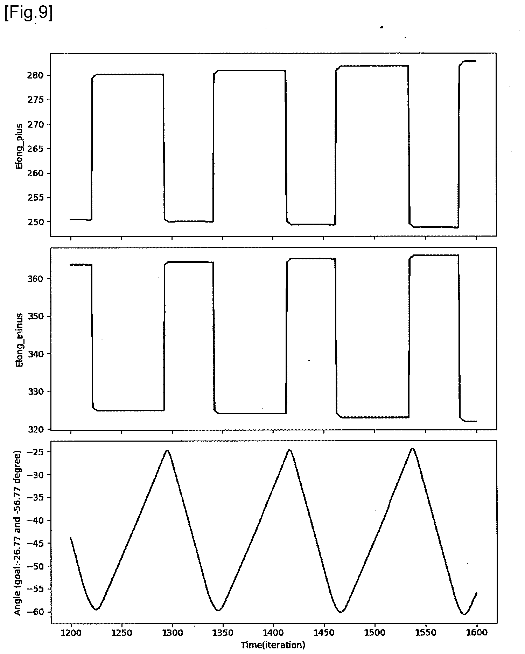

Les FIGURES 8 et 9 illustrent l'effet de l'apprentissage sur la dynamique d'une trajectoire définie entre deux positions angulaires du bras robotique : une première position correspondant à un angle de -60° et une deuxième position correspondant à un angle de -25°. En outre, le système de contrôle est configuré pour brider la vitesse de déplacement articulaire à une vitesse angulaire seuil égale à 0.3 m/s. Enfin, sur la FIGURE 8, la constante de raideur des ressorts associées à l'articulation correspondante est fixée à une valeur faible et égale à'10, tandis que, sur la FIGURE 9, la constante de raideur des ressorts associées à l'articulation correspondante est fixée à une valeur élevée et égale à 100.

Sur les FIGURES 8 et 9, le graphique du haut représente l'évolution de l'élongation du premier ressort « positif », le graphique du milieu représente l'évolution des élongation du deuxième ressort « négatif », et le graphique du bas représente l'évolution de la configuration articulaire du segment considéré, en représentant l'évolution de l'élongation de l'articulation correspondante. Dans le contexte de la présente invention, les ressorts « positif » et « négatif » sont des ressorts antagonistes rattachés à l'articulation considérée ici. L'axe des abscisses des trois graphiques est un axe temporel, le pas de temps étant ici de 15 ms.

Sur la FIGURE 8, l'apprentissage primaire est mis en avant : dès que le bras robotique atteint la position désirée, on lui demande de revenir à la position précédente. La fréquence d'oscillation dépend donc de la vitesse du bras robotique le long de la trajectoire, et donc de la raideur définie pour les ressorts antagonistes. On peut voir que les élongations apprises pour les deux positions sont 260° et 290°. Ces valeurs diffèrent des angles désirés. Ces valeurs tiennent compte de l'effet de la gravité sur l'articulation contrôlée (ici la 2eme articulation du bras). Dans ce premier exemple, la durée d'un cycle est de 2.4s.

Sur la FIGURE 9, la vitesse obtenue du bras robotique est plus rapide. Il réalise 1 cycle en 1.6 s.

Dans les expérimentations illustrées sur les FIGURES 8 et 9, la vitesse de déplacement du bras robotique est bridée par un tel que décrit précédemment mécanisme d'amortissement de la vitesse. Les paramètres utilisés ici pour une telle limitation est $Kvi = 600$ et $V_{seuil\_i} = 0$.

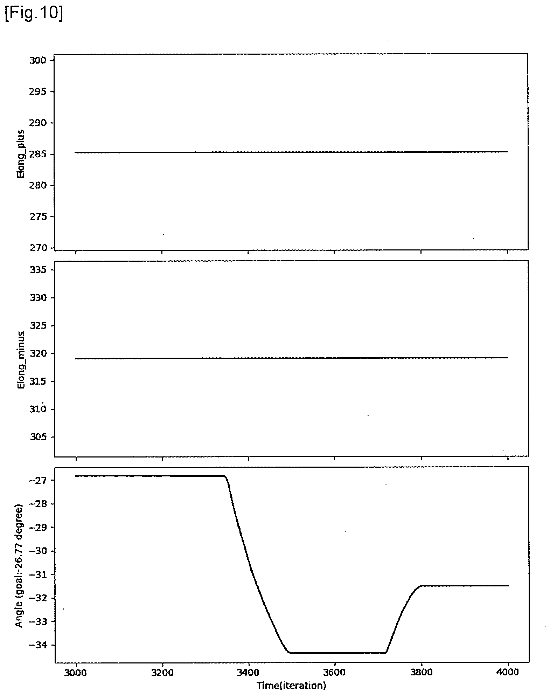

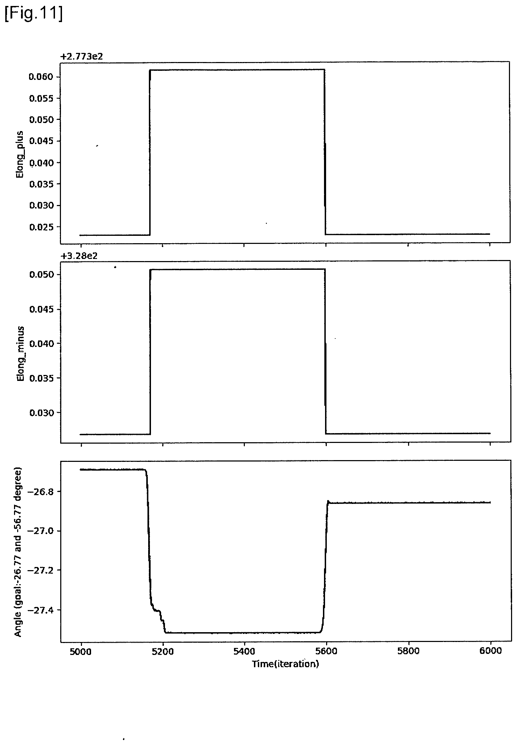

Les FIGURES 10 et 11 illustrent l'effet de l'ajout d'un poids - ici de 5 kg - sur le bras robotique piloté par le système de contrôle selon l'invention. Le segment considéré - ici le 2ème du bras robotique - est maintenu dans sa configuration initiale. Sur la FIGURE 10, la constante de raideur des ressorts antagonistes associées à l'articulation correspondante est fixée à une valeur faible et égale à 10, tandis que, sur la FIGURE 11, la constante de raideur des ressorts associées à l'articulation correspondante est fixée à une valeur élevée et égale à 100.

Sur les FIGURES 10 et 11, le graphique du haut représente l'évolution des élongation du premier ressort « positif », le graphique du milieu représente l'évolution des élongation du deuxième ressort « négatif », et le graphique du bas représente l'évolution de la configuration articulaire du segment considéré, en représentant l'évolution de l'élongation de l'articulation correspondante. Dans le contexte de la présente invention, les ressorts « positif » et « négatif » sont des ressorts antagonistes rattachés à l'articulation considérée ici. L'axe des abscisses des trois graphiques est un axe temporel, le pas de temps étant ici de 15 ms.

On constate ainsi que, lorsque l'on enlève le poids, à proximité de la 3400ème itération sur la FIGURE 10 et à proximité de la 5200ème itération sur la FIGURE 11, la configuration articulaire du bras robotique évolue rapidement : le bras robotique le bras ne peut revenir à la position initiale car l'adaptation a été inhibé. Seuls les ressorts principaux fonctionnent pour l'articulation considérée. Le mouvement s'arrête lorsque les forces de frottement compensent la force du ressort des articulations.

Sur la FIGURE 10, la constante de raideur est trop faible et le bras robotique - et son articulation dans cette expérience - ne peut revenir à la position d'origine. En revanche, comme visible sur la FIGURE 11, le retour à la position d'origine est rendu possible grâce à la raideur plus importance du ressort des articulations.

En outre, on remarque que la variation d'angle associée à l'ajout du poids sur le bras robotique est plus faible dans le cas d'une raideur élevée - FIGURE 11 - plutôt que dans le cas d'une raideur faible - FIGURE 10.

Enfin, on constate que le bras robotique est plus précis dans l'expérience de la FIGURE 11, même s'il ne revient pas exactement à la position d'origine cible, du fait des forces de frottements et de l'absence du mécanisme d'adaptation dans le système de contrôle mis en œuvre ici.

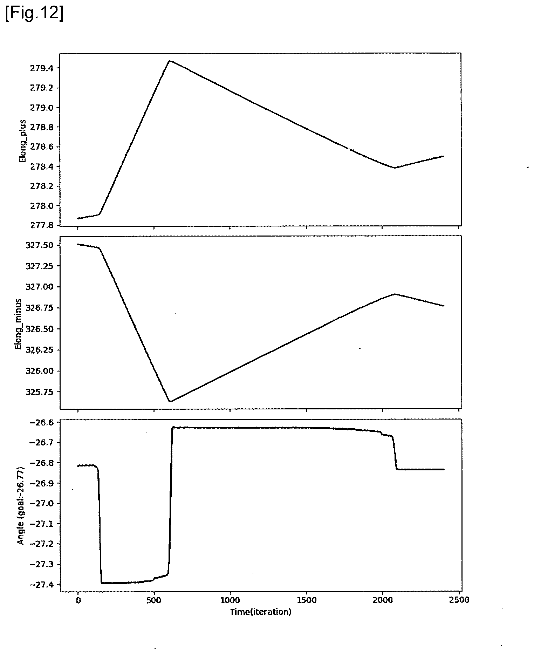

L'influence du mécanisme d'adaptation est mis en évidence sur la FIGURE 12. Comme précédemment, le graphique du haut représente l'évolution de l'élongation du premier ressort « positif », le graphique du milieu représente l'évolution de l'élongation du deuxième ressort « négatif », et le graphique du bas représente l'évolution de la configuration articulaire du segment considéré, en représentant l'évolution de l'élongation de l'articulation correspondante. Dans le contexte de la présente invention, les ressorts « positif » et « négatif » sont des ressorts antagonistes rattachés à l'articulation considérée ici. L'axe des abscisses des trois graphiques est un axe temporel, le pas de temps étant ici de 15 ms.

Dans l'expérience représente sur la FIGURE 12, le système de contrôle du bras robotique est mis en oeuvre avec une raideur élevée pour les ressorts des 6 articulations, ici fixé à $K = 100$. Un poids de 5kg est appliqué sur le bras robotique à proximité de la 100ème itération. Le bras robotique est alors configuré dans un état pour lequel il doit toujours maintenir la 2ème articulation à une élongation représentant un angle -26.8 degrés. Le mécanisme d'adaptation permet de corriger l'erreur entre l'élongation mesurée et l'élongation désirée.

Après la baisse du niveau du bras robotique causé par l'application du poids, le système de contrôle selon l'invention pilote le bras robotique afin qu'il s'adapte en contrôlant les élongations au repos des ressorts antagonistes associés aux articulations. Plus particulièrement, l'élongation au repos du premier ressort associé à l'articulation est augmenté, tandis que l'élongation au repos du deuxième ressort associé à l'articulation est diminué. Cette modification finit par générer une force suffisante sur l'articulation - c'est-à-dire supérieure aux forces extérieures appliquées à l'articulation - permettant ainsi de faire l'articulation.

L'erreur de position est bien réduite mais on observe aussi que la correction apportée est un peu trop forte : l'articulation du bras robotique dépasse la position cible désirée. L'élongation des deux ressorts virtuels antagonistes associés à l'articulation est alors à nouveau corrigée et l'articulation se stabilise enfin à la position cible désirée, malgré la présence du poids de 5kg en bout de bras robotique.

Dans cette expérience, le bras robotique mesure 1m de longueur et l'articulation pilotée est ici la 2ème articulation, travaillant dans le plan vertical.

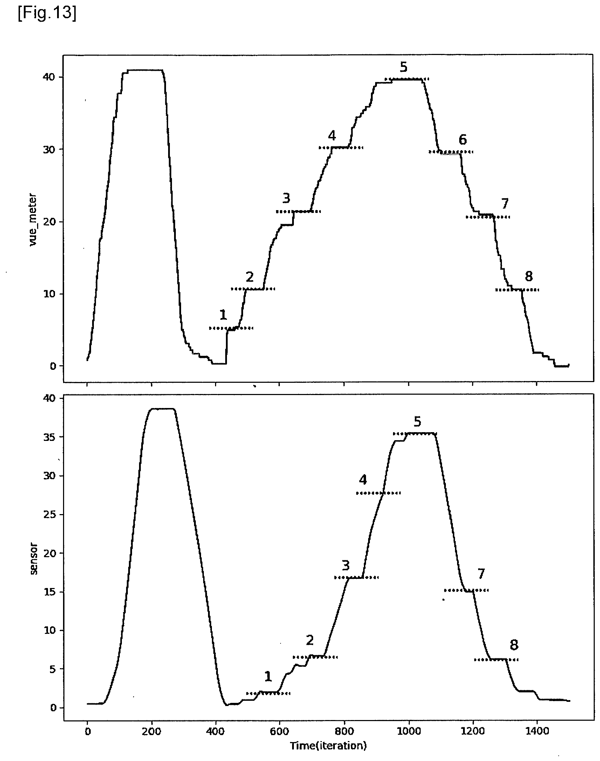

Enfin, la FIGURE 13 illustre la capacité du système de contrôle selon l'invention à piloter le bras robotique pour rejoindre une position angulaire non apprise grâce au mécanisme d'interpolation.

Dans cette expérience, deux états articulaires du bras robotique ont été appris, ces deux états correspondant, pour la 2ème articulation, à la position 0° et à la position 80°. Le mécanisme d'apprentissage est ensuite arrêté, de sorte que le bras robotique, via son système de contrôle, ne peut pas s'adapter pour améliorer sa performance. On utilise alors un vumètre - graphique du haut - dans l'interface homme-machine du simulateur de réseau de neurones pour changer la position angulaire désirée entre 0 et 40 degrés.

La position de l'articulation - mesurée par son capteur de position - est illustrée sur le graphique du bas de la FIGURE 13.

La FIGURE 13 montre qu'au début de l'expérience, on change rapidement la position cible (visible sur le graphique du haut) de 0° à 40°. On peut voir que le bras robotique suit la consigne avec une certaine latence en reproduisant globalement l'évolution des valeurs angulaires recherchées.

Le bras robotique est ensuite ramené à 0° et on change l'angle par paliers successifs pour vérifier si le bras robotique est bien capable de rejoindre ces positions notées de 1 à 8 sur la FIGURE 13. On constate que l'interpolation linéaire permet avec seulement 2 états éloignés de 80 degrés et malgré les effets non linéaires qui s'appliquent, de stabiliser le bras robotique sur une position proche de la position désirée. L'erreur de position est inférieure à 5°. Cette erreur de position est complètement corrigeable par le mécanisme d'apprentissage décrit précédemment.

En synthèse, l'invention concerne un système de contrôle pour un bras robotique dont chaque articulation est modélisée par un modèle mathématique s'inspirant d'un muscle de mammifère, représenté par au moins un ressort dont le contrôle d'une élongation permet de contrôler l'élongation de l'articulation correspondante. Ce modèle permet de définir une raideur associée à chaque ressort articulaire, permettant ainsi de définir des comportement plus ou moins compliants du bras robotique. Le système de contrôle met en oeuvre un réseau de neurones qui, par apprentissage, permet de définir l'élongation de l'articulation permettant d'obtenir une configuration articulaire donnée du bras robotique. Le système de contrôle selon l'invention déploie ensuite plusieurs mécanisme de contrôle secondaires qui permettent d'optimiser le contrôle du bras robotique, de le rendre plus précis et/ou plus véloce et/ou plus compliant par exemple.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

**Revendications**

**1.** Système de contrôle du déplacement d'un bras robotique comportant :

- M articulations reliant différents segments du bras robotique, chaque articulation i étant associée à un ou plusieurs degrés de liberté, avec M et i entiers naturels,

chaque degré de liberté étant associé à un ou plusieurs ressorts virtuels dont les élongations contrôlent la position du bras robotique ;

- au moins un actionneur associé à chaque articulation i et contrôlant en force ou en couple les élongations du ressort virtuel correspondant ;
- au moins un capteur de position associé à chaque articulation i afin de mesurer l'élongation mesurée $\theta_{mi}$ de l'articulation i correspondante ;

- une unité de calcul et de stockage reliés aux actionneurs et aux capteurs de position, avec :

- un contrôleur haut niveau, tel que par exemple un réseau de neurones, entraîné pour simuler un modèle de muscle inspiré du contrôle musculaire chez l'animal ou l'humain, chaque muscle étant modélisé par au moins un ressort qui est utilisé pour contrôler chaque articulation i,

le modèle simulant, pour chaque articulation i, le contrôle d'au moins un ressort virtuel principal ri de raideur $K_{ri}$ et d'élongation au repos $\theta_{0ri}$,

le contrôleur haut niveau produisant en sortie des valeurs variant par exemple entre 0 et 1, et qui sont multipliées par une constante $L_{r\_max}$ correspondant à une élongation maximale autorisée pour chaque ressort virtuel r,

pour obtenir des élongations au repos $\theta_{0ri}$ des ressorts virtuels, et apprenant à réaliser ce contrôle en fonction de consignes de l'utilisateur et de la physique du bras, le contrôleur haut niveau adaptant éventuellement les raideurs $K_{ri}$ des ressorts virtuels;

- un contrôleur bas niveau, piloté par le contrôleur haut niveau,

le contrôleur bas niveau calculant, pour chaque articulation i et à partir des élongations mesurées $\theta_{mi}$ par les capteurs de position associés à chaque articulation i, une commande de contrôle $\Gamma i$ qui comporte au moins une sous-commande principale de contrôle de l'élongation du ressort virtuel r principal : $K_{ri} \times (\theta_{0ri} - \theta_{mi})$, pour atteindre, à partir d'une position de départ de l'articulation i, une position d'équilibre cible $\theta_{i\_cible}$ ou une position transitoire cible $\theta_{i\_transitoire\_cible}$, pour chaque articulation i, à partir de l'élongation au repos $\theta_{0ri}$ fournies par le contrôleur haut niveau,

- une unité de stockage des élongations au repos apprises pour chaque articulation i et chaque ressort r, nommées $\theta_{0ri\_apprise/Ej}$, en fonction d'un ou de plusieurs états $E_j$ appris du bras robotique, avec j entier naturel,

chaque état Ej appris correspondant pour chacune des articulations i du bras robotique :

- à une position d'équilibre cible $\theta_{i\_cible/Ej}$ à atteindre et à maintenir, ou
- à une position transitoire cible $\theta_{i\_transitoire\_cible/Ej}$ correspondant à une transition à atteindre, entre deux positions cibles,

- une interface homme-machine (IHM), configurée notamment pour communiquer des positions cibles et émettre des signaux au contrôleur bas niveau et/ou au contrôleur haut niveau, afin notamment de contrôler la trajectoire du bras robotique,

système de contrôle dans lequel, pour chaque Etat $E_j$ et pour chaque articulation i, et à partir d'une position de départ :

- pendant l'apprentissage, un signal de renforcement est utilisé par le contrôleur haut niveau pour délivrer, en sortie, une nouvelle élongation au repos $\theta_{0ri}(n+1)$ afin de diminuer l'erreur entre la position d'équilibre cible $\theta_{i\_cible/Ej}$ ou la position transitoire cible $\theta_{i\_transitoire\_cible/Ej}$ et l'élongation mesurée $\theta_{mi}(n)$, à chaque itération n,

jusqu'à obtenir, par itérations successives, une élongation au repos apprise $\theta_{0ri\_apprise/Ej}$, pour laquelle l'erreur de positionnement est inférieure à une valeur V et pour laquelle :

- la position d'équilibre cible $\theta_{i\_cible/Ej}$ est atteinte et maintenue pour chaque articulation i, la commande de contrôle compensant alors les forces extérieures appliquées au segment de l'articulation i, ou
- la position transitoire cible $\theta_{i\_transitoire\_cible/Ej}$ de la transition est atteinte, avec n entier naturel correspondant au nombre d'itérations

après apprentissage, la sous commande principale est $Kri \times (\theta_{0ri\_apprise/Ej} - \theta_{mi}(n))$, et permet de déplacer le bras robotique vers la position d'équilibre cible $\theta_{i\_cible/Ej}$ ou la position transitoire cible $\theta_{i\_transitoire\_cible/Ej}$.

**2.** Système de contrôle pour un bras robotique selon la revendication précédente, dans lequel :

- l'unité de stockage comporte plusieurs collections d'états, et pour chaque collection d'états, définies en fonction de la raideur fixée des ressorts virtuels, le contrôleur haut niveau est entraîné, pour chaque articulation i, à déplacer le robot vers la position cible associée à chaque état $E_j$,

- l'interface homme-machine IHM permet alors de sélectionner un mode d'utilisation du bras robotique en fonction de la raideur des ressorts virtuels de chaque articulation i associés à une collection d'états.

**3.** Système de contrôle pour un bras robotique selon l'une des revendications précédentes, dans lequel, à une élongation maximale fixée au plus à un seuil donné, une raideur minimale $K_{ri\_min}$ par articulation i est calculée pour permettre d'atteindre la position associée à un état $E_j$, la raideur $K_{ri}$ de l'articulation i du système de contrôle est comprise entre une raideur faible $K_{ri\_min}$ et une raideur élevée $K_{ri\_max}$.

**4.** Système de contrôle pour un bras robotique selon l'une des revendications précédentes, dans lequel après l'entrainement, le contrôleur haut niveau calcule, pour une position de consigne P, les élongations au repos $\theta_{0ri/P}$ correspondant aux élongations au repos apprises $\theta_{0ri\_appris/El}$ issues d'un état $E_l$ appris et sélectionné parmi une collection d'états $E_j$ appris, et qui est le plus proche de la consigne P, en fonction d'une distance calculée entre la position de consigne P et les positions des états appris $E_j$,

la reconnaissance de l'état Ei tenant compte de la raideur des ressorts et de la position cible
l'unité de contrôle bas niveau calculant alors, à chaque itération n, la sous-commande principale de contrôle du ressort $K_{ri} \times (\theta_{0ri\_apprise/El} - \theta_{mi}(n))$ pour chaque articulation i afin d'atteindre la position cible associée à l'état $E_l$.

**5.** Système de contrôle pour un bras robotique selon l'une quelconque des revendications précédentes, dans lequel le contrôleur haut niveau est un réseau de neurones, et le mécanisme d'apprentissage est basé sur :

- un apprentissage associatif, tel que par exemple la règle de Hebb, modulé par un signal de renforcement ou de correction d'erreur, ou
- une descente de gradients sur un réseau multicouche, ou
- un algorithme d'apprentissage par renforcement.

**6.** Système de contrôle pour un bras robotique selon la revendication 5, dans lequel l'élongation au repos des ressorts est le produit d'une activité neuronale telle que : $\theta_{0\_ressort\_i}(n) = L_{r\_max\_i} \times f(\Sigma W_{ij}(n) \cdot E_j(P(n)))$, chaque élongation au repos étant transmise au contrôleur bas niveau pour piloter l'actionneur correspondant, où :

- $W_{ij}$ est un poids synaptique d'une synapse du réseau de neurones
- $E_j$ est un état discrétisé lié à la position cible
- $E_j(n) = 1$ si on désire aller vers la position associée à $E_j$ à l'itération n ou alors $E_j(n) = E_j(P(n))$ si on ne sait pas quel état activer pour la position P(n), $E_j(n)$ correspondant alors au niveau de reconnaissance de l'état j pour la position P(n), et $E_j(n) = 0$ lorsque l'on ne veut pas aller vers la position associée à $E_j$
- ressort est choisi parmi un ressort virtuel principal r, un ressort virtuel secondaire r', ou un ressort de correction d'erreur dynamique r",
- l'indice i correspond à l'articulation et au numéro du neurone en sortie, et l'indice j correspond au numéro de l'état $E_j$, f étant une fonction d'activation des neurones ayant, par convention, des valeurs de sortie comprises entre 0 et 1.

**7.** Système de contrôle pour un bras robotique selon la revendication 6, dans lequel des neurones du réseau de neurones sont utilisés pour :

- calculer à partir de la sortie des neurones, l'élongation au repos des ressorts i associés $\theta_{0\_ressort\_i\_apprise/Ej}(n)$ telle que : $\theta_{0\_ressort\_i\_apprise/Ej}(n) = L_{r\_max\_i} \times f(\Sigma_j W_{ij}(n) \cdot E_j(n))$
- calculer la modification d'un poids synaptique d'un neurone du contrôleur haut niveau selon une variante de la règle de Hebb tenant compte d'un terme d'erreur ou de renforcement $R_i(n)$, préférentiellement :

$$dW_{ij}(n) = E_j(P(n)) \times \theta_{0\_ressort\_i/Ej}(n) \cdot R_i(n)$$

la modification des poids synaptiques s'arrêtant dès que la valeur absolue du signal d'erreur diminue, cette restriction évitant de modifier l'apprentissage lorsque les articulations bougent correctement d'une configuration de départ vers leurs positions cibles,

avec l'erreur $R_i(n)$ pour le ressort i définie par : $R_i(n) = f((\theta_{i\_cible/Ej}(n) - \theta_{mi}(n)) \times a1) - f((\theta_{mi}(n) - \theta_{i\_cible/Ej}(n)) \times a1)$,

a1 étant choisi pour que le signal de renforcement sature pour une différence angulaire supérieure à un seuil angulaire donné.

**8.** Système de contrôle pour un bras robotique selon l'une des revendications 1 à 7, dans lequel :

- après l'entrainement, le contrôleur haut niveau utilise, pour tout nouvel état $E_{j'}$ à apprendre et associé à une position cible P(n), plusieurs états appris $E_j$ pour interpoler la réponse au nouvel état $E_{j'}$ ;
- l'unité de contrôle bas niveau calcule, à chaque itération n, pour chaque articulation i, la sous-commande principale de contrôle de l'élongation du ressort virtuel r :

$K_{ri} \times (\theta_{0ri} - \theta_{mi}(n))$, avec $\theta_{0ri}$ obtenue grâce à la pondération des couples états/élongations appris autour de $E_j$, telle que l'activité $E_j(P(n))$ des états appris $E_j$ correspondant à leur distance à la position P(n), après normalisation de type softmax, leurs activité devient $D_j$ tel que:

$D_j(P(n)) = \exp(\gamma * E_j(P(n))) / \Sigma_{l=1 \text{ à } Ne} \exp(\gamma * E_l(P(n)))$ avec $N_e$ le nombre d'états appris, et $\theta_{0ri} = L_{r\_max\_i} \cdot f(\Sigma_{=1 \text{ à } Ne} W_{ij} \cdot D_j(P(n)))$

avec $\gamma$ une constante permettant de rehausser fortement les états les plus actifs et de mettre à 0 les autres, f est une fonction rampe bornée y = f(x) telle que : y = 0 si x < 0, y = 1 si x > 1 et y = x sinon, et $E_j(P(n)) = 1 - dist(E_j, P(n)) / d_{max}$ avec $d_{max}$ un terme de normalisation correspondant à la distance maximale possible entre les positions apprises et les positions testées, et $W_{ij}$ est un poids synaptique appris d'un neurone du réseau de neurone.

**9.** Système de contrôle pour un bras robotique selon l'une des revendications 1 à 8, dans lequel pour rejoindre une position cible non apprise P définie dans l'espace articulaire par ($\theta_{0\_cible}, ... \theta_{i\_cible}, ..., \theta_{M\_cible}$) ou dans l'espace de la tache, à partir des états $E_{mapping\_j}$ associés :

- à 4 positions précédemment apprises les plus proches dans l'espace articulaire de la position cible en 3D, ou
- aux orientations de l'extrémité du bras robotique pour ces 4 positions définies par les angles d'Euler ou les angles de lacet, roulis et tangage, ou
- à chaque articulation considérée indépendamment pour réduire la complexité ;

et, pour chaque articulation i, les élongations proposées sont pondérées par le niveau de reconnaissance des états $E_{mapping\_j}$ pour la position cible, suivant :

$$\theta_{0ri}(n) = L_{r\_max\_i} \cdot f \left(\Sigma_{k=1..4 \text{ des } l=top\text{-}k(Emapping\_j(P(n)), k)} W_{ij} \cdot E_{mapping\_l}(P(n))\right)$$

où top-k(E,k) correspond au top-k des activités des états $E_{mapping\_j}$ en fonction de la position P(n) cible, et

$$E_{mapping\_l}(P(n)) = 1 - dist(E_{mapping\_l}, P(n)) / d_{max}$$

et $W_{ij}$ est un poids synaptique appris.

**9.** Système de contrôle pour un bras robotique selon l'une quelconque des revendications précédentes 1 à 8, dans lequel le contrôleur haut niveau est entraîné, via un mécanisme d'adaptation, lors de l'apprentissage ou en phase d'utilisation, pour un état $E_j$ :

$$\Gamma i(n) = K_{ri} \times (\theta_{0ri\_apprise/Ej} - \theta_{mi}(n)) + K_{r'i} \times (\theta_{0r'iEj(n)} - \theta_{mi}(n))$$

le contrôleur haut niveau utilisant la modélisation d'une élongation $\theta_{0r'iEj}(n)$ d'au moins un ressort secondaire virtuel r'i par articulation i et situé en série du ressort virtuel principal $r_i$,
après apprentissage, la commande de contrôlé $\Gamma i$ permet à partir de la position de départ, de déplacer le bras robotique vers la position d'équilibre cible $\theta_{i\_cible/Ej}$ qui sera atteinte avec une erreur inférieure à un seuil $S_{adapt}$ inférieure à la valeur V, à une itération N,
la commande de contrôle $\Gamma i$ compensant à ce moment-là les forces extérieures appliquées aux segments pour chacune des articulations i du bras robotique, et maintenant la position du bras robotique à une erreur inférieure au seuil $S_{adapt}$ pour les itérations suivant l'itération N.

**10.** Système de contrôle pour un bras robotique selon la revendication précédente, dans lequel un autre ressort secondaire est ajouté pour apprendre la force minimale permettant d'initier un déplacement et vaincre les forces de frottement sec qui sont en général plus grandes que les forces de frottement visqueux afin de générer directement cette force lorsque le bras robotique arrête de se rapprocher de la position cible.

**11.** Système de contrôle pour un bras robotique selon l'une quelconque des revendications 1 à 10, dans lequel le contrôleur haut niveau est entrainé pour apprendre différentes élongations au repos $\theta_{0ri}$ - pour chaque articulation i - en fonction de la dynamique de la trajectoire cible,

la trajectoire cible étant discrétisée en différents points de passage qui constituent des positions cibles pour lesquelles des élongations au repos $\theta_{0ri}$ spécifiques sont déterminées,
cet apprentissage se faisant suivant l'ordre des points de passage, d'état en état,
chaque état correspondant dans ce cas à une transition entre deux positions cibles dépendant du sens de déplacement afin que le bras robotique puisse apprendre à tenir compte des effets liés à son inertie et à la dynamique de la trajectoire cible.

**12.** Système de contrôle pour un bras robotique selon l'une quelconque des revendications 1 à 11, dans lequel l'unité de calcul et de stockage met en oeuvre lorsque le bras robotique est en fonctionnement dynamique et se déplace entre plusieurs états, un mécanisme de correction d'erreur en dynamique utilisant l'erreur mesurée à la dernière itération du déplacement visant à atteindre la position associée à un état $E_j$ pour contrôler pour chaque articulation i un ressort virtuel secondaire de correction d'erreur dynamique, situé en série du ressort virtuel principal,

ce ressort virtuel secondaire s'opposant ou complétant l'effet du ressort virtuel principal en proposant un terme de correction intégrant par corrections itératives l'effet des inerties lors de la reproduction d'un même mouvement, mécanisme de correction d'erreur en dynamique dans lequel l'unité de contrôle réalise la somme de la sous-commande de contrôle principal et de la sous-commande du ressort secondaire associé à l'adaptation dynamique :

$$\Gamma i(n) = K_{ri} \times (\theta_{0ri\_apprise/Ej} - \theta_{mi}(n)) + K_{r''i} * (\theta_{0\_dyn\_i}(p) - \theta_{mi}(n))$$

Avec p un entier naturel correspondant à la dernière itération programmée pour atteindre la position cible $E_j$
La mise à jour de $\theta_{0\_dyn\_i}(n)$ s'effectue à chaque itération n en utilisant :

$$\theta_{0\_dyn\_i}(p) = L_{r''\_max\_i} . f(W_{dyn\_ij}(p) . E_j(p))$$

l'élongation $\theta_{0\_dyn\_i}$ de ce ressort est modifiée de manière à ce qu'à la fin d'un tronçon de mouvement entre deux états $E_{j1}$ et $E_{j2}$, la position articulaire de l'articulation considérée se rapproche de plus en plus de la position articulaire cible $E_{j2}$, suivant l'apprentissage du contrôleur haut niveau comme suit :

$$dW_{dyn\_ij}(p) = R_i(p) * E_j(p)$$

$$W_{dyn\_ij}(p+1) = W_{dyn\_ij}(p) + \varepsilon_{learn} . dW_{dyn\_ij}(p)$$

$$avec\ R_i(p) = \theta_{cible\_i}(p) - \theta_{mi}(p)$$

Avec p un entier naturel correspondant à la dernière itération programmée pour atteindre la position cible $E_j$.

**13.** Système de contrôle pour un bras robotique selon l'une quelconque des revendications précédentes 1 à 12, dans lequel le modèle de muscle pour chaque articulation i est représenté pour chaque type de ressort par une paire de ressorts virtuels antagonistes ;

et l'unité de commande bas niveau somme les deux sous commandes de contrôle : $\Gamma + i(n)$ associé au premier ressort et Γ-i(n) associé au second ressort antagoniste, tel que :

$$\Gamma+i(n) = K_{ressort\_i} . (\theta_{0ri+}(n) - \theta_{mi}(n)) \text{ et } \Gamma-i(n) = -K_{ressort\_i} . (\theta_{0ri-}(n) - \theta_{mi}(n))$$

l'apprentissage de l'élongation étant réalisé en parallèle sur les deux ressorts associés à chaque articulation.

**14.** Système de contrôle pour un bras robotique selon l'une quelconque des revendications précédentes, dans lequel le contrôleur bas niveau somme, à partir des élongations mesurées $\theta_{mi}$, lors du déplacement du bras robotique, la sous commande de contrôle de l'élongation et une sous commande permettant d'aider à la synchronisation des mouvements des différentes articulations en limitant la vitesse de chaque articulation i en fonction de la différence entre une vitesse réelle mesurée de l'articulation et une vitesse cible pour ladite articulation qui s'écrit : $\Gamma'vi(n) = K'vi *$

$$(V_{cible\_i} - V_{mi})$$

Où $V_{mi}$ étant la dérivée de $\theta_{mi}$, si cette vitesse réelle mesurée $V_{mi}$ est supérieure à la vitesse cible $V_{cible\_i}$.

**15.** Système de contrôle pour un bras robotique selon l'une quelconque des revendications précédentes, dans lequel le contrôleur bas niveau somme lors du déplacement, à partir des élongations mesurées $\theta_{mi}$ :

- la sous commande principale de contrôle de l'élongation et
- une sous commande de limitation de vitesse pour chaque articulation i, et qui s'écrit

$$\Gamma vi(n) = Kvi * (V_{seuil\_i} - V_{mi})$$

Où $V_{mi}$ étant la dérivée de $\theta_{mi}$, et qui s'active si la vitesse mesurée $V_m$ de l'articulation correspondante i est supérieure à une vitesse seuil $V_{seuil\_i}$.

**16.** Système de contrôle pour un bras robotique selon l'une des revendications 1 à 15, dans lequel

au cours du déplacement entre deux positions cibles A et B associées respectivement à un état de départ et à un état d'arrivée

le contrôleur haut niveau utilise les élongations au repos apprises $\theta_{0iappris}$ des deux états pour calculer de nouvelles élongations au repos correspondant à leur pondération lors du déplacement pour contrôler explicitement la vitesse de l'effecteur terminal (vit) lors de son mouvement le long de la trajectoire AB en utilisant l'équation de discrétisation du déplacement suivante :

$$EB(n) = (n-n_0) / N_{AB} \text{ et } E_A(n) = 1 - E_B(n),$$

avec $n = n_0$ à la dernière itération de A et $N_{AB}$ est le nombre d'itérations pour aller de A à B calculé en fonction du temps de cycle Tc de calcul du contrôleur haut niveau :

$$N_{AB} = (dist(A,B) / vit) / Tc$$

le contrôleur bas niveau sommant les sous commandes associées aux deux états en les pondérant afin :

- d'atteindre à chaque itération n de $n_0$ à $n_0 + N_{AB}$, une nouvelle position d'équilibre entre A et B ;
- de contrôler la vitesse de chaque articulation i en imposant une vitesse supérieure ou égale à une vitesse cible, en exploitant également une sous commande de limitation de vitesse pour chaque articulation i, et qui s'écrit $\Gamma vi(n) = Kvi * (V_{seuil\_i} - V_{mi})$

Où $V_{mi}$ est la dérivée de $\theta_{mi}$, et qui s'active si la vitesse mesurée $V_m$ de l'articulation correspondante i est supérieure à une vitesse seuil $V_{seuil\_i}$.

**17.** Système de contrôle pour un bras robotique selon l'une quelconque des revendications 1 à 16, dans lequel les raideurs $K_{ri}(n)$ sont apprises et réglées par le réseau de neurones et le contrôleur bas niveau, via le mécanisme d'apprentissage par renforcement, le taux d'apprentissage de l'élongation $\theta_{0ri}(n)$ étant plus rapide que celle de la raideur $K_{ri}(n)$.

**18.** Système de contrôle pour un bras robotique selon l'une quelconque des revendications précédentes, dans lequel :

- les élongations sont angulaires ; ou
- les élongations sont linéaires.

**19.** Système de contrôle pour un bras robotique selon l'une quelconque des revendications précédentes, dans lequel :

- le système est sans capteurs d'efforts ; et/ou
- le système est sans mécanique additionnelle ; et/ou
- le système est sans modèle dynamique du bras robotique pour en piloter son fonctionnement.

**20.** Système de contrôle pour un bras robotique selon l'une quelconque des revendications précédentes, dans lequel le robot est un robot collaboratif ou cobot, c'est-à-dire un robot ne devant pas dépasser une vitesse limite de déplacement et devant limiter sa force d'impact pour respecter les normes ISO associées.

[Fig.1]

$$\theta_0 = \Sigma w_j \cdot E_j$$

$$L_0 = \theta_0$$

$$L = \theta$$

$$\vec{F_s} = K.(\theta_0 - \theta)$$

$$\vec{F_s}$$

$$m.\vec{g}$$

$$\theta_{cible}$$

[Fig.2]

$$L_0$$

$$L$$

$$\vec{F_s} = 0$$

$$P$$

$$\theta$$

[Fig.3]

[Fig.4]

[Fig.5]

[Fig.6]

[Fig.7]

[Fig.8]

[Fig.9]

[Fig.10]

[Fig.11]

[Fig.12]

[Fig.13]

Europäisches
Patentamt

European
Patent Office

Office européen
des brevets

**RAPPORT DE RECHERCHE EUROPEENNE**

Numéro de la demande

**EP 24 31 5498**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WEIGAND JONAS ET AL: "Neural Adaptive Control of a Robot Joint Using Secondary Encoders", GENETIC AND EVOLUTIONARY COMPUTING : PROCEEDINGS OF THE TWELFTH INTERNATIONAL CONFERENCE ON GENETIC AND EVOLUTIONARY COMPUTING, DECEMBER 14-17, 2019; CHANGZHOU, JIANGSU, CHINA; [ADVANCES IN INTELLIGEN , vol. 980 8 mai 2019 (2019-05-08), pages 153-161, XP009523132, DOI: 10.1007/978-3-030-19648-6_18 ISBN: 978-3-030-19648-6 Extrait de l'Internet: URL:https://link.springer.com/chapter/10.1 007/978-3-030-19648-6_18#citeas * page 154 - page 158 * ----- | 1-21 | INV. B25J9/16 |
| A | WO 2024/121565 A1 (CAMBRIDGE ENTPR LTD [GB]) 13 juin 2024 (2024-06-13) * alinéa [0004] - alinéa [0014] * * figures 4A-4B * * alinéa [0046] - alinéa [0060] * ----- | 1-21 | DOMAINES TECHNIQUES RECHERCHES (IPC) B25J |

Le présent rapport a été établi pour toutes les revendications

| Lieu de la recherche | Date d'achèvement de la recherche | Examinateur |
|---|---|---|
| La Haye | 2 juin 2025 | De Santis, Agostino |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 .................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 31 5498

02-06-2025

| Document brevet cité au rapport de recherche | Date de publication | Membre(s) de la famille de brevet(s) | Date de publication |
|---|---|---|---|
| WO 2024121565 A1 | 13-06-2024 | GB 2625151 A | 12-06-2024 |
| | | WO 2024121565 A1 | 13-06-2024 |

EPO FORM P0460